# EUROPEAN PATENT APPLICATION

(11) **EP 4 799 851 A1**
(43) Date of publication of application: **02.09.2026**
(21) Application number: 24890029.2
(22) Date of filing: 24.05.2024
(51) Int. Cl.: B60L 53/00, H02J 7/00, B60L 53/22, B60L 53/62, B60L 55/00

(54) **CHARGING/DISCHARGING DEVICE, CHARGING/DISCHARGING SYSTEM, AND CHARGING/DISCHARGING METHOD**

(30) Priority: 15.11.2023 CN 202311522943
(71) Applicant: Huawei Digital Power Technologies Co., Ltd., Shenzhen, Guangdong 518043 (CN)
(72) Inventor: CHENG, Dong, Shenzhen, Guangdong 518043 (CN)
(74) Representative: Maiwald GmbH
(86) International application number: PCT/CN2024/095148
(87) International publication number: WO 2025/102658

(57) **Abstract**

A charging/discharging device (300) is disclosed, and includes a resistance conversion circuit (320), a connection confirm CC interface (312), and an alternating-current interface (311). One end of the resistance conversion circuit is grounded, and the other end is connected to the CC interface. Both the CC interface and the alternating-current interface are configured to connect to an electric vehicle (400). The resistance conversion circuit includes a plurality of switches and a plurality of resistors. The plurality of switches are configured to adjust an equivalent resistance value of the resistance conversion circuit. The equivalent resistance value of the resistance conversion circuit is used for the electric vehicle to output an alternating current to the alternating-current interface, or is used for the electric vehicle to receive an alternating current output by the alternating-current interface. In addition, a charging/discharging system and a charging/discharging method are disclosed. The charging/discharging device can enable the electric vehicle to implement a charging function and a discharging function, with a simple charging/discharging operation and low device costs.

## Description

This application claims priority to Chinese Patent Application No. 202311522943.6, filed with the China National Intellectual Property Administration on November 15, 2023 and entitled "CHARGING/DISCHARGING DEVICE, CHARGING/DISCHARGING SYSTEM, AND CHARGING/DISCHARGING METHOD", which is incorporated herein by reference in its entirety.

### TECHNICAL FIELD

This application relates to the charging field, and more specifically, to a charging/discharging device, a charging/discharging system, and a charging/discharging method.

### BACKGROUND

With rapid popularization of electric vehicles, the electric vehicles no longer merely serve as transportation tools. To relieve pressure of a power grid and bring specific benefits to a user, an electric vehicle starts to have a discharging function in addition to a charging function. For example, some electric vehicles start to have a vehicle-to-grid (vehicle-to-grid, V2G) discharging function and a vehicle-to-vehicle (vehicle-to-vehicle, V2V) discharging function, to sell electric energy to the power grid or another electric vehicle.

However, during current actual application, a charging pile usually has only a single function of charging an electric vehicle, and cannot well meet a requirement of implementing a charging function and a discharging function by an electric vehicle.

### SUMMARY

This application provides a charging/discharging device, a charging/discharging system, and a charging/discharging method. The charging/discharging device can implement both a charging function of an electric vehicle and a discharging function of the electric vehicle, with a simple charging/discharging operation and low device costs.

According to a first aspect, a charging/discharging device is provided. The charging/discharging device includes a resistance conversion circuit, a connection confirm CC interface, and an alternating-current interface. One end of the resistance conversion circuit is grounded, the other end of the resistance conversion circuit is connected to the CC interface, and the CC interface and the alternating-current interface are configured to connect to an electric vehicle. The resistance conversion circuit includes a plurality of switches and a plurality of resistors, and the plurality of switches are configured to adjust an equivalent resistance value of the resistance conversion circuit. The equivalent resistance value of the resistance conversion circuit is used for the electric vehicle to output an alternating current to the alternating-current interface, or is used for the electric vehicle to receive an alternating current output by the alternating-current interface.

It can be understood that, because one end of the resistance conversion circuit is grounded and the other end is connected to the CC interface, the equivalent resistance value of the resistance conversion circuit may also be a resistance value of the CC interface.

It can be further understood that, in this embodiment of this application, different values of the equivalent resistance value of the resistance conversion circuit, namely, different values of the resistance value of the CC interface, in the charging/discharging device correspond to a charging mode and a discharging mode of the electric vehicle. Specifically, that the equivalent resistance value of the resistance conversion circuit is used for the electric vehicle to receive the alternating current output by the alternating-current interface may correspond to the charging mode of the electric vehicle. In this case, the electric vehicle may determine, by detecting a value of the resistance value of the CC interface, to execute the charging mode. That the equivalent resistance value of the resistance conversion circuit is used for the electric vehicle to output the alternating current to the alternating-current interface may correspond to the discharging mode of the electric vehicle. In this case, the electric vehicle may determine, by detecting a value of the resistance value of the CC interface, to execute the discharging mode.

In the foregoing technical solution, the plurality of switches and resistors are disposed in the resistance conversion circuit connected to the CC interface. The charging/discharging device may adjust the resistance value of the CC interface by controlling an on/off state of the plurality of switches, so that different values of the resistance value of the CC interface correspond to the charging mode and the discharging mode of the electric vehicle. In this way, the electric vehicle can determine, by detecting the resistance value of the connected CC interface, a charging/discharging mode to be executed, and then implement a charging function and a discharging function through the charging/discharging device.

In addition, in this embodiment of this application, the charging/discharging device may be directly equipped with a charging/discharging connector, and the CC interface and the alternating-current interface are disposed as a CC plug and an alternating-current plug in a charging/discharging connector plug. In this way, in comparison with a case in which a charging connector device is used during charging of the electric vehicle and a discharging connector device is used during discharging, according to the charging/discharging device provided in this embodiment of this application, device replacement can be avoided during charging/discharging of the electric vehicle, to simplify a charging/discharging operation of the electric vehicle. In addition, the charging/discharging device provided in this embodiment of this application does not need to be equipped with both a charging connector device and a discharging connector device. This not only can reduce costs of the charging/discharging device, but also can reduce a size of the charging/discharging device, so that the charging/discharging device can be carried in the vehicle.

With reference to the first aspect, in some implementations of the first aspect, the charging/discharging device further includes a controller, and the controller is further configured to: in response to a charging request or a discharging request of the electric vehicle, control an on/off state of the plurality of switches in the resistance conversion circuit, to adjust the equivalent resistance value of the resistance conversion circuit to any one of a charging resistance value, a vehicle-to-grid V2G discharging resistance value, a vehicle-to-vehicle V2V discharging resistance value, and a vehicle-to-load V2L discharging resistance value. The charging resistance value is used for the electric vehicle to receive an alternating current output by the alternating-current interface. The V2G discharging resistance value is used for the electric vehicle to output an alternating current to the alternating-current interface in a V2G discharging mode. The V2V discharging resistance value is used for the electric vehicle to output an alternating current to the alternating-current interface in a V2V discharging mode. The V2L discharging resistance value is used for the electric vehicle to output an alternating current to the alternating-current interface in a V2L discharging mode.

In the foregoing technical solution, the charging/discharging device may adjust, according to the charging request or the discharging request of the electric vehicle, the equivalent resistance value of the resistance conversion circuit connected to the CC interface, to enable the electric vehicle to determine, by detecting the resistance value of the CC interface, to execute a corresponding charging/discharging mode. In addition, the electric vehicle usually implements different discharging functions by executing different discharging modes. For example, when the electric vehicle needs to discharge to another electric vehicle to implement a V2V discharging function, the electric vehicle usually outputs an alternating current by executing the V2V discharging mode. In this embodiment of this application, even if the electric vehicle does not have the V2V discharging mode, the charging/discharging device may still adjust the resistance value of the CC interface to the V2L discharging resistance value, to enable the electric vehicle to output an alternating current to the alternating-current interface based on the V2L discharging mode. The charging/discharging device may further transmit, to another connected electric vehicle, the alternating current that is output by the electric vehicle based on the V2L discharging mode, to implement the V2V discharging function of the electric vehicle.

With reference to the first aspect, in some implementations of the first aspect, the charging/discharging device further includes a switch unit and a control pilot CP interface. The other end of the resistance conversion circuit is connected to the CC interface through the switch unit, and the CP interface is configured to connect to the electric vehicle. The controller is further configured to: when the alternating-current interface, the CC interface, and the CP interface are connected to the electric vehicle, adjust the equivalent resistance value of the resistance conversion circuit; control the switch unit to cut off a connection between the other end of the resistance conversion circuit and the CC interface; and in response to a change in a voltage value of the CP interface, control the switch unit to conduct the connection between other end of the resistance conversion circuit and the CC interface, to enable the electric vehicle to detect an adjusted equivalent resistance value of the resistance conversion circuit through the CC interface.

It can be understood that, in this embodiment of this application, when the resistance value of the CC interface is adjusted from a first resistance value to a second resistance value, the electric vehicle usually can detect the second resistance value only when the resistance value of the CC interface changes from infinity to the second resistance value.

In the foregoing technical solution, when the electric vehicle is connected to the charging/discharging device and the electric vehicle needs to change a charging/discharging mode executed by the charging/discharging device, the charging/discharging device may first adjust a value of the equivalent resistance value of the resistance conversion circuit to a resistance value corresponding to a changed charging/discharging mode, and then cut off the connection between the resistance conversion circuit and the CC interface through the switch unit, to enable the resistance value of the CC interface to be infinite. When the charging/discharging device determines, based on detecting a change in a voltage of the CP interface, that the electric vehicle has detected that the resistance value of the CC interface is infinite, the charging/discharging device conducts the connection between the resistance conversion circuit and the CC interface through the switch unit again, so that the resistance value of the CC interface changes from infinity to the adjusted equivalent resistance value of the resistance conversion circuit. In this way, after the connection between the resistance conversion circuit and the CC interface is conducted again, based on a process in which the resistance value of the CC interface changes from infinity to the adjusted equivalent resistance value of the resistance conversion circuit, the electric vehicle can detect the resistance value of the CC interface, in other words, detect the adjusted equivalent resistance value of the resistance conversion circuit, and change the charging/discharging mode based on the adjusted equivalent resistance value of the resistance conversion circuit.

With reference to the first aspect, in some implementations of the first aspect, the charging/discharging device further includes a connection confirm circuit, the connection confirm circuit is connected to the CP interface, and the connection confirm circuit is configured to adjust the voltage value of the CP interface. That the controller is configured to: in response to the change in the voltage value of the CP interface, control the switch unit to conduct the connection between other end of the resistance conversion circuit and the CC interface, to enable the electric vehicle to detect the adjusted equivalent resistance value of the resistance conversion circuit through the CC interface includes: The controller is configured to: in response to detecting the change in the voltage value of the CP interface, control the connection confirm circuit to adjust the voltage value of the CP interface, to enable the electric vehicle to determine, based on the voltage value of the CP interface, to detect the adjusted equivalent resistance value of the resistance conversion circuit through the CC interface; and control the switch unit to conduct the connection between other end of the resistance conversion circuit and the CC interface, to enable the electric vehicle to detect the adjusted equivalent resistance value of the resistance conversion circuit through the CC interface.

In the foregoing technical solution, when the electric vehicle is connected to the charging/discharging device and the electric vehicle needs to change the charging/discharging mode executed by the charging/discharging device, after the charging/discharging device determines, based on detecting the change in the voltage of the CP interface, that the electric vehicle has detected that the resistance value of the CC interface is infinite, the charging/discharging device may first adjust the voltage value of the CP interface through the connection confirm circuit to simulate a process of disconnection and reconnection between the CP interface and the electric vehicle, to simulate a process of removing the charging/discharging connector from the electric vehicle and then re-inserting the charging/discharging connector into the electric vehicle during specific implementation. Then the charging/discharging device conduct the connection between the resistance conversion circuit and the CC interface through the switch unit again, so that the resistance value of the CC interface changes from infinity to the adjusted equivalent resistance value of the resistance conversion circuit. In this way, after the connection between the resistance conversion circuit and the CC interface is conducted again, the electric vehicle can re-detect the resistance value of the CC interface, in other words, re-detect the adjusted equivalent resistance value of the resistance conversion circuit, based on the simulated re-insertion of the charging/discharging connector, and change the charging/discharging mode based on the adjusted equivalent resistance value of the resistance conversion circuit.

In addition, in the foregoing technical solution, the disconnection and the reconnection between the CP interface and the electric vehicle are simulated, to simulate the process of removing the charging/discharging connector from the electric vehicle and then re-inserting the charging/discharging connector into the electric vehicle. This helps avoid the following case: When the switch unit disconnects the resistance conversion circuit from the CC interface, the electric vehicle mistakenly considers that a connection between the CC interface and the electric vehicle fails, and therefore no longer detects the resistance value of the CC interface.

With reference to the first aspect, in some implementations of the first aspect, the connection confirm circuit includes a first switch, a first resistor, and a voltage source. One end of the first switch is connected to the voltage source, and the other end of the first switch is connected to the CP interface through the first resistor. That the controller is configured to: in response to detecting the change in the voltage value of the CP interface, control the connection confirm circuit to adjust the voltage value of the CP interface includes: The controller is configured to: in response to detecting the change in the voltage value of the CP interface, control the first switch to be first turned off and then turned on, to adjust the voltage value of the CP interface.

In the foregoing technical solution, the voltage source of the connection confirm circuit is connected to the CP interface through the first switch and the first resistor. When the first switch is turned off, the connection between the voltage source and the CP interface is cut off, and the voltage value of the CP interface is zero, to simulate cutoff of the connection between the CP interface and the electric vehicle. When the first switch is turned on, the connection between the voltage source and the CP interface is conducted, and the voltage value of the CP interface is not zero, to simulate disconnection between the CP interface and the electric vehicle. Therefore, the charging/discharging device may simulate a process of disconnection and reconnection between the CP interface and the electric vehicle by controlling the first switch to be turned off and turned on.

With reference to the first aspect, in some implementations of the first aspect, the charging/discharging device further includes a power transmission line. The power transmission line is configured to: transmit an alternating current from an alternating-current power grid to the electric vehicle connected to the alternating-current interface; or transmit, to the alternating-current power grid, an alternating current that is output by the electric vehicle and that is received by the alternating-current interface; or transmit, to another electric vehicle connected to the charging/discharging device, the alternating current that is output by the electric vehicle and that is received by the alternating-current interface.

In the foregoing technical solution, the charging/discharging device may implement power transmission between the alternating-current power grid and the electric vehicle and between the electric vehicle and the another electric vehicle through the disposed power transmission line, so that the electric vehicle implements the charging function, a V2G discharging function, and the V2V discharging function through the charging/discharging device, to meet charging/discharging requirements of the electric vehicle in different scenarios. In addition, the electric vehicle may receive cost-effective valley electricity from the alternating-current power grid at night through the power transmission line, and provide, in the daytime for another electric vehicle that needs to be charged, electricity that is more cost-effective than peak electricity. This enables an owner of a discharging vehicle to make specific earnings, reduces charging costs of an owner of a charged vehicle, and relieves pressure of the power grid.

In addition, because the charging/discharging device transmits alternating currents between the alternating-current power grid and the electric vehicle and between the electric vehicle and the another electric vehicle, the charging/discharging device does not need to be equipped with a power conversion apparatus for converting an alternating current into a direct current. This can reduce a size of the charging/discharging device, so that the charging/discharging device can be carried in the vehicle. In this way, the electric vehicle can supply electric energy to another electric vehicle through the charging/discharging device at any time in different scenarios, to make corresponding earnings.

With reference to the first aspect, in some implementations of the first aspect, the charging/discharging device further includes an alternating-current-interface-side electricity meter. The alternating-current-interface-side electricity meter is configured to measure an electric quantity of the alternating current that is output by the electric vehicle and that is received by the alternating-current interface, or is configured to measure an electric quantity of an alternating current that is output by the alternating-current interface to the electric vehicle.

In the foregoing technical solution, when the electric vehicle implements the V2G discharging function and the V2V discharging function through the charging/discharging device, the charging/discharging device may measure, through the disposed alternating-current-interface-side electricity meter, quantities of electricity that is transmitted by the electric vehicle to the alternating-current power grid and another electric vehicle, to make corresponding earnings.

With reference to the first aspect, in some implementations of the first aspect, the controller is further configured to: when the alternating-current interface receives the alternating current that is output by the electric vehicle in the V2L mode or the V2V mode, and the charging/discharging device outputs the alternating current to the another electric vehicle connected to the charging/discharging device, in response to the electric quantity of the alternating current that is output by the electric vehicle and that is received by the alternating-current interface being less than an electric quantity needed for charging the another electric vehicle, control the alternating current from the alternating-current power grid and the alternating current received by the alternating-current interface to be transmitted to the another electric vehicle through the power transmission line; or in response to the electric quantity of the alternating current that is output by the electric vehicle and that is received by the alternating-current interface being greater than an electric quantity needed for charging the another electric vehicle, control the alternating current received by the alternating-current interface to be transmitted to the alternating-current power grid and the another electric vehicle through the power transmission line.

In the foregoing technical solution, when the charging/discharging device is connected to the alternating-current power grid and the electric vehicle supplies electric energy to the another electric vehicle through the charging/discharging device, based on a difference between an electric quantity of an alternating current that can be provided by the electric vehicle and the electric quantity needed for charging the another electric vehicle, the charging/discharging device may further use power transmission between the charging/discharging device and the alternating-current power grid to make an electric quantity of an alternating current transmitted by the electric vehicle to the another electric vehicle through the charging/discharging device meet the electric quantity needed for charging the another electric vehicle.

According to a second aspect, a charging/discharging system is provided. The charging/discharging system includes a charging/discharging device and an electric vehicle. The charging/discharging device includes a resistance conversion circuit, a pile-side connection confirm CC interface, and a pile-side alternating-current interface. The electric vehicle includes a vehicle-side CC interface and a vehicle-side alternating-current interface. One end of the resistance conversion circuit is grounded, and the other end of the resistance conversion circuit is connected to the pile-side CC interface. The pile-side CC interface is configured to connect to the vehicle-side CC interface. The pile-side alternating-current interface is configured to connect to the vehicle-side alternating-current interface. The resistance conversion circuit includes a plurality of switches and a plurality of resistors. The plurality of switches are configured to adjust an equivalent resistance value of the resistance conversion circuit. The equivalent resistance value of the resistance conversion circuit is used for the vehicle-side alternating-current interface to output an alternating current to the pile-side alternating-current interface, or is used for the vehicle-side alternating-current interface to receive an alternating current output by the pile-side alternating-current interface.

It can be understood that, because one end of the resistance conversion circuit is grounded and the other end is connected to the pile-side CC interface, the equivalent resistance value of the resistance conversion circuit may also be a resistance value of the pile-side CC interface connected to the resistance conversion circuit. In addition, when the pile-side CC interface is connected to the vehicle-side CC interface, the resistance value of the pile-side CC interface is the same as a resistance value of the vehicle-side CC interface.

In the foregoing technical solution, the plurality of switches and resistors are disposed in the resistance conversion circuit connected to the pile-side CC interface. The charging/discharging device may adjust the equivalent resistance value of the resistance conversion circuit by controlling an on/off state of the plurality of switches, so that different values of the equivalent resistance value of the resistance conversion circuit, namely, different values of the resistance value of the pile-side CC interface, correspond to a charging mode or a discharging mode executed by the electric vehicle. In this way, the electric vehicle can determine the resistance value of the pile-side CC interface by detecting the resistance value of the vehicle-side CC interface, and then determine a charging/discharging mode to be executed, to implement a charging function and a discharging function of the electric vehicle through the charging/discharging device.

In addition, in this embodiment of this application, the charging/discharging device may be directly equipped with a charging/discharging connector, and the pile-side CC interface and the pile-side alternating-current interface are disposed as a CC plug and an alternating-current plug in a charging/discharging connector plug. In this way, in comparison with a case in which a charging connector device is used during charging of the electric vehicle and a discharging connector device is used during discharging, according to the charging/discharging device provided in this embodiment of this application, device replacement can be avoided during charging/discharging of the electric vehicle, to simplify a charging/discharging operation of the electric vehicle. In addition, the charging/discharging device provided in this embodiment of this application does not need to be equipped with both a charging connector device and a discharging connector device. This not only can reduce costs of the charging/discharging device, but also can reduce a size of the charging/discharging device, so that the charging/discharging device can be carried in the vehicle.

With reference to the second aspect, in some implementations of the second aspect, the charging/discharging device further includes a pile-side controller. The pile-side controller is configured to: in response to a charging request or a discharging request of the electric vehicle, control an on/off state of the plurality of switches in the resistance conversion circuit, to adjust the equivalent resistance value of the resistance conversion circuit to any one of a charging resistance value, a vehicle-to-grid V2G discharging resistance value, a vehicle-to-vehicle V2V discharging resistance value, and a vehicle-to-load V2L discharging resistance value. The charging resistance value is used for the vehicle-side alternating-current interface to receive an alternating current output by the pile-side alternating-current interface. The V2G discharging resistance value is used for the vehicle-side alternating-current interface to output an alternating current to the pile-side alternating-current interface in a V2G discharging mode. The V2V discharging resistance value is used for the vehicle-side alternating-current interface to output an alternating current to the pile-side alternating-current interface in a V2V discharging mode. The V2L discharging resistance value is used for the vehicle-side alternating-current interface to output an alternating current to the pile-side alternating-current interface in a V2L discharging mode.

With reference to the second aspect, in some implementations of the second aspect, the charging/discharging device further includes a switch unit and a pile-side control pilot CP interface, and the electric vehicle includes a vehicle-side CP interface and a vehicle-side controller. The other end of the resistance conversion circuit is connected to the pile-side CC interface through the switch unit, and the pile-side CP interface is configured to connect to the vehicle-side CP interface. The pile-side controller is further configured to: when the pile-side alternating-current interface is connected to the vehicle-side alternating-current interface, the pile-side CC interface is connected to the vehicle-side CC interface, and the pile-side CP interface is connected to the vehicle-side CP interface, adjust the equivalent resistance value of the resistance conversion circuit; and control the switch unit to cut off a connection between the other end of the resistance conversion circuit and the pile-side CC interface, to adjust a voltage value of the pile-side CC interface. The vehicle-side controller is configured to adjust a voltage value of the pile-side CP interface in response to detecting a change in the resistance value of the vehicle-side CC interface. The pile-side controller is further configured to: in response to a change in the voltage value of the pile-side CP interface, control the switch unit to conduct the connection between other end of the resistance conversion circuit and the pile-side CC interface, to enable the vehicle-side controller to detect an adjusted equivalent resistance value of the resistance conversion circuit through the vehicle-side CC interface.

With reference to the second aspect, in some implementations of the second aspect, the charging/discharging device further includes a pile-side connection confirm circuit, and the electric vehicle further includes a vehicle-side connection confirm circuit. The pile-side connection confirm circuit is connected to the pile-side CP interface, and the pile-side connection confirm circuit is configured to adjust the voltage value of the pile-side CP interface. The vehicle-side connection confirm circuit is connected to the vehicle-side CP interface, and the vehicle-side connection confirm circuit is configured to adjust a voltage of the vehicle-side CP interface. That the vehicle-side controller is configured to adjust the voltage value of the pile-side CP interface in response to detecting the change in the resistance value of the vehicle-side CC interface includes: The vehicle-side controller is configured to: in response to detecting the change in the resistance value of the vehicle-side CC interface, control the vehicle-side connection confirm circuit to adjust the voltage value of the pile-side CP interface. That the pile-side controller is further configured to: in response to the change in the voltage value of the pile-side CP interface, control the switch unit to conduct the connection between other end of the resistance conversion circuit and the pile-side CC interface, to enable the vehicle-side controller to detect the adjusted equivalent resistance value of the resistance conversion circuit through the vehicle-side CC interface includes: The pile-side controller is configured to: in response to detecting the change in the voltage value of the pile-side CP interface, control the pile-side connection confirm circuit to adjust a voltage value of the vehicle-side CP interface, to enable the vehicle-side controller to determine, based on the voltage value of the vehicle-side CP interface, to detect the adjusted equivalent resistance value of the resistance conversion circuit through the vehicle-side CC interface; and control the switch unit to conduct the connection between other end of the resistance conversion circuit and the pile-side CC interface, to enable the vehicle-side controller to detect the adjusted equivalent resistance value of the resistance conversion circuit through the vehicle-side CC interface.

With reference to the second aspect, in some implementations of the second aspect, the pile-side connection confirm circuit includes a first switch, a first resistor, and a voltage source, and the vehicle-side connection confirm circuit includes a second switch, a second resistor, and a third resistor. One end of the first switch is connected to the voltage source, and the other end of the first switch is connected to the pile-side CP interface through the first resistor. One end of the second resistor is grounded through the second switch, and the other end of the second resistor is connected to the vehicle-side CP interface. One end of the third resistor is grounded, and the other end of the third resistor is connected to the vehicle-side CP interface. That the vehicle-side controller is configured to: in response to detecting the change in the resistance value of the vehicle-side CC interface, control the vehicle-side connection confirm circuit to adjust the voltage value of the pile-side CP interface includes: The vehicle-side controller is configured to: in response to detecting the change in the resistance value of the vehicle-side CC interface, control the second switch to be turned off, to adjust the voltage value of the pile-side CP interface. That the pile-side controller is configured to: in response to detecting the change in the voltage value of the pile-side CP interface, control the pile-side connection confirm circuit to adjust the voltage value of the pile-side CP interface includes: The pile-side controller is configured to: in response to detecting the change in the voltage value of the pile-side CP interface, control the first switch to be first turned off and then turned on, to adjust the voltage value of the vehicle-side CP interface.

According to a third aspect, a charging/discharging method is provided. The charging/discharging method includes: receiving an input instruction, where the input instruction indicates a charging request or a discharging request of an electric vehicle; and adjusting a resistance value of a connection confirm CC interface of a charging/discharging device in response to the input instruction, where the resistance value of the CC interface is used for the electric vehicle to output an alternating current to the charging/discharging device, or is used for the electric vehicle to receive an alternating current output by the charging/discharging device.

It can be understood that the foregoing charging/discharging method may be performed by the charging/discharging device, and specifically, may be performed by a controller in the charging/discharging device.

In the foregoing technical solution, the charging/discharging device may adjust a value of the resistance value of the CC interface of the charging/discharging device according to the charging request or the discharging request of the electric vehicle, so that the electric vehicle determines, by detecting the resistance value of the CC interface of the charging/discharging device, a charging mode or a discharging mode to be executed, to implement a charging function and a discharging function of the electric vehicle. In addition, in the foregoing charging/discharging method, the electric vehicle determines, based on different values of the resistance value of the CC interface, to execute the charging mode or the discharging mode. Therefore, the charging/discharging device may be directly equipped with a charging/discharging connector including a CC interface, to enable the electric vehicle to determine a charging/discharging mode to be executed. This can avoid device replacement during charging/discharging of the electric vehicle, to simplify a charging/discharging operation of the electric vehicle. In addition, the charging/discharging device provided in this embodiment of this application does not need to be equipped with both a charging connector device and a discharging connector device. This not only can reduce costs of the charging/discharging device, but also can reduce a size of the charging/discharging device, so that the charging/discharging device can be carried in the vehicle.

With reference to the third aspect, in some implementations of the third aspect, the charging/discharging device includes a resistance conversion circuit. One end of the resistance conversion circuit is grounded, and the other end of the resistance conversion circuit is connected to the CC interface. The resistance conversion circuit includes a plurality of switches and a plurality of resistors. Adjusting the resistance value of the connection confirm CC interface of the charging/discharging device in response to the input instruction includes: in response to the input instruction, controlling an on/off state of the plurality of switches in the resistance conversion circuit, to adjust the equivalent resistance value of the resistance conversion circuit to any one of a charging resistance value, a vehicle-to-grid V2G discharging resistance value, a vehicle-to-vehicle V2V discharging resistance value, and a vehicle-to-load V2L discharging resistance value. The charging resistance value is used for the electric vehicle to receive an alternating current output by the charging/discharging device. The V2G discharging resistance value is used for the electric vehicle to output an alternating current to the charging/discharging device in a V2G discharging mode. The V2V discharging resistance value is used for the electric vehicle to output an alternating current to the charging/discharging device in a V2V discharging mode. The V2L discharging resistance value is used for the electric vehicle to output an alternating current to the charging/discharging device in a V2L discharging mode.

In the foregoing technical solution, the equivalent resistance value of the resistance conversion circuit connected to the CC interface of the charging/discharging device may be adjusted according to the input instruction indicating that the electric vehicle requests charging or discharging, so that the electric vehicle determines, by detecting the resistance value of the CC interface, to execute a corresponding charging mode or discharging mode, to meet different charging requirements and discharging requirements of the electric vehicle.

In addition, even if the electric vehicle does not have a V2V discharging function, the charging/discharging device may still adjust the resistance value of the CC interface to the V2L discharging resistance value, to enable the electric vehicle to output an alternating current to an alternating-current interface based on the V2L discharging mode. The charging/discharging device further transmits, to another connected electric vehicle, the alternating current that is output by the electric vehicle based on the V2L mode, to similarly implement the V2V discharging function of the electric vehicle.

With reference to the third aspect, in some implementations of the third aspect, the charging/discharging method further includes: when the resistance value of the CC interface is used for the electric vehicle to output the alternating current to the charging/discharging device, and the charging/discharging device outputs an alternating current to another electric vehicle, receiving a power supply capability pulse width modulation PWM signal sent by the electric vehicle, where the power supply capability PWM signal indicates a maximum output current value of the electric vehicle; sending the power supply capability PWM signal to the another electric vehicle, to enable the another electric vehicle to adjust a maximum allowed input current value based on the power supply capability PWM signal; and controlling an alternating current output by the electric vehicle to be transmitted to the another electric vehicle.

In the foregoing technical solution, when the electric vehicle supplies electric energy to the another electric vehicle through the charging/discharging device, the charging/discharging device may send, to the another electric vehicle, the PWM signal indicating the maximum output current value that can be provided by the electric vehicle. In this way, the another electric vehicle can adjust the maximum allowed input current value of the another electric vehicle based on the PWM signal, to ensure that the electric vehicle properly supplies electric energy to the another electric vehicle through the charging/discharging device.

With reference to the third aspect, in some implementations of the third aspect, the charging/discharging method further includes: when the resistance value of the CC interface is used for the electric vehicle to output the alternating current to the charging/discharging device, and the charging/discharging device outputs an alternating current to another electric vehicle, receiving a power supply capability packet sent by the electric vehicle, where the power supply capability packet indicates a maximum output current value of the electric vehicle; sending the power supply capability packet to the another electric vehicle, to enable the another electric vehicle to adjust a maximum allowed input current value based on the power supply capability packet; and controlling an alternating current output by the electric vehicle to be transmitted to the another electric vehicle.

In the foregoing technical solution, the electric vehicle may be communicatively connected to the charging/discharging device, for example, through a wireless connection. When the electric vehicle supplies electric energy to the another electric vehicle through the charging/discharging device, the charging/discharging device may send, to the another electric vehicle, the power supply capability packet indicating the maximum output current value that can be provided by the electric vehicle. In this way, the another electric vehicle can adjust the maximum allowed input current value of the another electric vehicle based on the packet, to ensure that the electric vehicle properly supplies electric energy to the another electric vehicle through the charging/discharging device.

For beneficial effects of the second aspect and the third aspect, refer to the beneficial effects of the first aspect. Details are not described herein again.

### BRIEF DESCRIPTION OF DRAWINGS

FIG. 1 is a diagram of a charging scenario of an electric vehicle according to an embodiment of this application;
FIG. 2 is a diagram of a connection structure of an electric vehicle shown in FIG. 1 during charging;
FIG. 3 is a diagram of an application scenario of a changing/discharging device according to an embodiment of this application;
FIG. 4 is a diagram of a structure of a changing/discharging device shown in FIG. 3 according to an embodiment of this application;
FIG. 5 is a diagram of a structure of another changing/discharging device according to an embodiment of this application;
FIG. 6 is a diagram of a specific circuit structure of an example resistance conversion circuit according to an embodiment of this application;
FIG. 7 is a diagram of a structure of an example charging/discharging device according to an embodiment of this application;
FIG. 8 is a diagram of a structure of another example changing/discharging device according to an embodiment of this application;
FIG. 9 is a diagram of a structure of another example changing/discharging device according to an embodiment of this application;
FIG. 10 is a diagram of a structure of another example changing/discharging device according to an embodiment of this application;
FIG. 11 is a diagram of a structure of another example changing/discharging device according to an embodiment of this application;
FIG. 12 is a diagram of a structure of another changing/discharging device according to an embodiment of this application;
FIG. 13 is a diagram of a structure of a charging/discharging system according to an embodiment of this application;
FIG. 14 is a diagram of an example specific circuit structure of a pile-side connection confirm circuit and a vehicle-side connection confirm circuit according to an embodiment of this application; and
FIG. 15 is a schematic flowchart of a charging/discharging method according to an embodiment of this application.

### DESCRIPTION OF EMBODIMENTS

The following descriptions are provided before embodiments of this application are described.

In the descriptions of embodiments of this application, a "connection" may be understood as an electrical connection, and a connection between two electrical elements may be a direct electrical connection or an indirect electrical connection between the two electrical elements for implementing signal transmission. For example, that A is connected to B may be understood as that A is directly electrically connected to B, or may be understood as that A is indirectly electrically connected to B through one or more other electrical elements.

In the descriptions of embodiments of this application, unless otherwise specified, "and/or" describes only an association relationship between associated objects and indicates that three relationships may exist. For example, A and/or B may indicate the following three cases: Only A exists, both A and B exist, and only B exists.

The following describes the technical solutions of this application with reference to the accompanying drawings.

In recent years, environmental pollution and energy shortage have accelerated development and use of green renewable energy. Developing a new energy vehicle is an important measure for energy saving, emission reduction, and pollution prevention. The new energy vehicle is a transportation tool driven by electric energy to travel, and may be, for example, a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), or a plug-in hybrid electric vehicle (plug-in hybrid electric vehicle, PHEV).

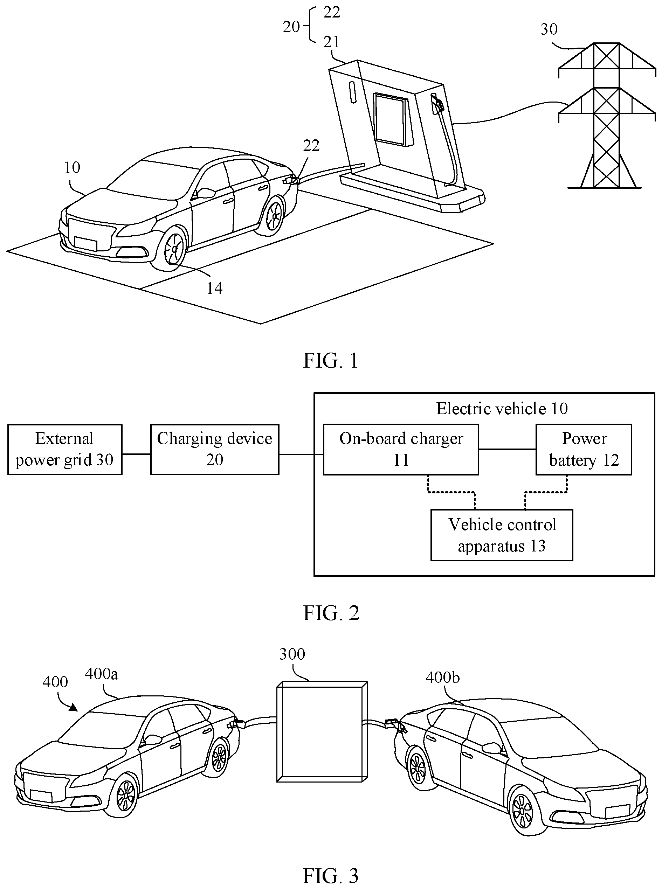

FIG. 1 is a diagram of a charging scenario of an electric vehicle 10 according to an embodiment of this application. FIG. 2 is a diagram of a connection structure of the electric vehicle 10 shown in FIG. 1 during charging. It should be understood that the electric vehicle 10 may be the foregoing new energy vehicle.

As shown in FIG. 1 and FIG. 2, the electric vehicle 10 may include an on-board charger (on-board charger, OBC) 11, a power battery 12, a vehicle control apparatus 13, a wheel 14, and a motor (not shown in the figure). The on-board charger 11 is connected to the power battery 12. For example, the vehicle control apparatus 13 may be connected to the on-board charger 11 and the power battery 12, or the vehicle control apparatus 13 may be directly integrated into the on-board charger 11.

The power battery 12 may be a large-capacity and high-power battery. The power battery 12 may supply power to the motor under the control of the vehicle control apparatus 13. The motor converts electric energy supplied by the power battery 12 into mechanical energy, to drive the wheel 14 to rotate, to implement traveling of the electric vehicle 10.

During charging of the electric vehicle 10, the power battery 12 of the electric vehicle 10 is usually charged through a charging pile 20. The charging pile 20 may include a charging host 21 and a charging connector 22. When the charging pile 20 is an alternating-current charging pile, the charging host 21 mainly includes a power transmission circuit (not shown in the figure). One end of the power transmission line is connected to an alternating-current power grid 30, and the other end is connected to the charging connector 22 through a cable, to transmit, to the charging connector 22, an alternating current input by the alternating-current power grid 30. The charging connector 22 is configured to connect to the electric vehicle 10, to transmit the alternating current of the alternating-current power grid 30 to the electric vehicle 10.

During specific implementation, a plug of the charging connector 22 is usually connected to a vehicle socket of the electric vehicle 10, so that the charging connector 22 is connected to the on-board charger 11 of the electric vehicle 10. The on-board charger 11 may include an alternating current-direct current (alternating current-direct current, AC-DC) conversion apparatus and a direct current-direct current (direct current-direct current, DC-DC) conversion apparatus (not shown in the figure) that are connected to each other. The AC-DC conversion apparatus is configured to convert an alternating current that is output by the charging pile 20 through the charging connector 22 into a direct current, and output the direct current to the DC-DC conversion apparatus. The DC-DC conversion apparatus is configured to further convert the direct current output by the AC-DC conversion apparatus into a direct current applicable to the power battery 12, and transmit the direct current to the power battery 12, to charge the power battery 12.

As described in the background, with popularization of the electric vehicle 10, the on-board charger 11 in the electric vehicle 10 gradually develops toward a bidirectional on-board charger with a bidirectional conversion function. Based on the bidirectional on-board charger, in addition to a charging function, the electric vehicle also starts to have a discharging function, for example, a V2G discharging function and a V2V discharging function.

Specifically, the bidirectional on-board charger may include a bidirectional AC-DC conversion apparatus and a bidirectional DC-DC conversion apparatus that are connected to each other. In a possible scenario, the bidirectional AC-DC conversion apparatus is configured to convert an alternating current output by the charging pile 20 into a direct current, and output the direct current to the bidirectional DC-DC conversion apparatus. The bidirectional DC-DC conversion apparatus is configured to further convert the direct current output by the bidirectional AC-DC conversion apparatus into a direct current applicable to the power battery, and transmit the direct current to the power battery 12, to implement the charging function of the electric vehicle 10. In another possible scenario, the bidirectional DC-DC conversion apparatus is configured to convert a direct current output by the power battery 12 into a first direct current, and then output the first direct current to the bidirectional AC-DC conversion apparatus. The bidirectional AC-DC conversion apparatus is configured to convert the first direct current output by the bidirectional DC-DC conversion apparatus into an alternating current, and then output the alternating current to another electric vehicle, the alternating-current power grid 30, or the like, to implement the V2G discharging function or the V2G discharging function of the electric vehicle.

However, the charging pile 20 usually has only a single function of charging the electric vehicle 10, and cannot well implement the discharging function of the electric vehicle 10. In addition, during current actual application, the electric vehicle 10 usually implements the charging function and the discharging function respectively through a charging connector device and a discharging connector device that are independently designed, and a charging/discharging operation of the electric vehicle 10 is complex. In addition, during vehicle-to-vehicle discharging, the electric vehicle 10 usually needs to be equipped with both a charging connector device and a discharging connector device, and the charging connector device and the discharging connector device need to be connected to a charged vehicle and a discharging vehicle respectively. Consequently, a vehicle-to-vehicle discharging operation of the electric vehicle 10 is complex, and overall device costs are high due to configuration of both the charging connector device and the discharging connector device.

Based on the foregoing content, embodiments of this application provide a charging/discharging device, a charging/discharging system, and a charging/discharging method. The charging/discharging device can implement both a charging function of an electric vehicle and a discharging function of the electric vehicle, with a simple charging/discharging operation and low device costs.

The charging/discharging device, the charging/discharging system, and the charging/discharging method that are provided in embodiments of this application are described below in detail with reference to the accompanying drawings. It should be noted that, for ease of understanding, in the accompanying drawings provided in embodiments of this application, a solid connection line represents a power transmission line, and a dashed connection line represents a signal transmission line.

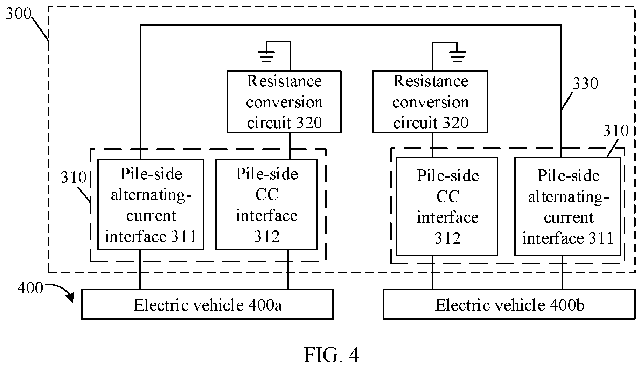

FIG. 3 is a diagram of an application scenario of a changing/discharging device 300 according to an embodiment of this application. FIG. 4 is a diagram of a structure of the changing/discharging device 300 shown in FIG. 3.

As shown in FIG. 3, the charging/discharging device 300 may be configured to connect to an electric vehicle 400, to output an alternating current to the electric vehicle 400 or receive an alternating current output by the electric vehicle 400, to implement a charging function and a discharging function of the electric vehicle 400.

As shown in FIG. 4, the charging/discharging device 300 may include a pile-side alternating-current interface 311, a pile-side connection confirm (connection confirm, CC) interface 312, and a resistance conversion circuit 320. One end of the resistance conversion circuit 320 is grounded, and the other end is connected to the pile-side CC interface 312. The pile-side alternating-current interface 311 and the pile-side CC interface 312 are separately configured to connect to the electric vehicle 400.

Specifically, the charging/discharging device 300 may include a plurality of device interfaces 310, and the pile-side alternating-current interface 311 and the pile-side CC interface 312 are disposed in each device interface 310. Each device interface 310 is configured to connect to the electric vehicle 400. There may be a plurality of resistance conversion circuits 320, and the plurality of resistance conversion circuits 320 are in a one-to-one correspondence with the plurality of device interfaces 310. One end of each resistance conversion circuit 320 is grounded, and the other end is connected to a pile-side CC interface 312 in a corresponding device interface 310.

In an example, each device interface 310 may further include a pile-side protective earthing (protective earthing, PE) interface (not shown in the figure), and the pile-side PE interface is connected to a device ground in the charging/discharging device 300. One end of the resistance conversion circuit 320 is connected to a pile-side PE interface in a corresponding device interface 310, and the other end is connected to a pile-side CC interface in the corresponding device interface 310. The pile-side PE interface is configured to connect to the electric vehicle 400.

For example, the charging/discharging device 300 may include a plurality of charging/discharging connectors. The device interface 310 may be a charging/discharging connector plug in the charging/discharging connector. The pile-side alternating-current interface 311, the pile-side CC interface 312, and the pile-side PE interface are an alternating-current plug, a CC plug, and a PE plug in the charging/discharging connector plug, and are configured to plug-connect to corresponding sockets in the electric vehicle 400.

For ease of description and understanding, in this embodiment of this application, an example in which the charging/discharging device 300 includes two device interfaces 310 is used for description. The two device interfaces 310 are respectively configured to connect to two electric vehicles 400, for example, are respectively configured to connect to an electric vehicle 400a and an electric vehicle 400b.

The resistance conversion circuit 320 includes a plurality of switches and a plurality of resistors. The plurality of switches are configured to adjust an equivalent resistance value of the resistance conversion circuit 320. The equivalent resistance value of the resistance conversion circuit 320 is used for the electric vehicle 400 to output an alternating current to the pile-side alternating-current interface 311, or is used for the electric vehicle 400 to receive an alternating current output by the pile-side alternating-current interface 311.

It can be understood that, in this embodiment of this application, because one end of the resistance conversion circuit 320 is grounded and the other end is connected to the pile-side CC interface 312, the equivalent resistance value of the resistance conversion circuit 320 may also be a resistance value of the pile-side CC interface 312 connected to the resistance conversion circuit 320.

It can be further understood that, that the equivalent resistance value of the resistance conversion circuit 320 is used for the electric vehicle 400 to receive the alternating current output by the pile-side alternating-current interface 311 may be understood as that the resistance value of the pile-side CC interface 312 corresponds to a charging mode of the electric vehicle 400 in this case. That the equivalent resistance value of the resistance conversion circuit 320 is used for the electric vehicle 400 to output the alternating current to the pile-side alternating-current interface 311 may be understood as that the resistance value of the pile-side CC interface 312 corresponds to a discharging mode of the electric vehicle 400 in this case. That is, in this embodiment of this application, different values of the resistance value of the pile-side CC interface 312 in the charging/discharging device 300 correspond to the charging mode and the discharging mode of the electric vehicle 400. Therefore, the electric vehicle 400 may determine, by detecting the resistance value of the pile-side CC interface 312, to execute the charging mode or the discharging mode, and execute a corresponding mode after completing connection confirmation with the charging/discharging device 300. For example, the electric vehicle 400 determines, by detecting that the resistance value of the pile-side CC interface 312 is 1.5 kΩ, to execute the charging mode; or the electric vehicle 400 determines, by detecting that the resistance value of the pile-side CC interface is 3 kΩ, to execute the discharging mode.

For example, the electric vehicle 400a connected to the charging/discharging device 300 is used as an example. When the electric vehicle 400a detects that the resistance value of the pile-side CC interface 312 corresponds to a charging mode of the electric vehicle 400a, after completing connection confirmation with the charging/discharging device 300, the electric vehicle 400a may receive an alternating current output by the pile-side alternating-current interface 311 of the charging/discharging device 300, convert the alternating current into a direct current, and then transmit the direct current to a power battery, to implement a charging function of the electric vehicle 400a.

Alternatively, when the electric vehicle 400a detects that the resistance value of the pile-side CC interface 312 corresponds to a discharging mode of the electric vehicle 400a, after completing connection confirmation with the charging/discharging device 300, the electric vehicle 400a may convert a direct current stored in a power battery into an alternating current, and then output the alternating current to the pile-side alternating-current interface 311 of the charging/discharging device 300, to implement a discharging function of the electric vehicle 400a. For example, the charging/discharging device 300 may transmit, to the electric vehicle 400b connected to the charging/discharging device 300, an alternating current that is output by the electric vehicle 400a and that is received by the pile-side alternating-current interface 311, to implement a V2V discharging function of the electric vehicle 400a.

In the foregoing technical solution, the plurality of switches and resistors are disposed in the resistance conversion circuit 320 connected to the pile-side CC interface 312. The charging/discharging device 300 may adjust a value of the equivalent resistance value of the resistance conversion circuit 320 by controlling an on/off state of the plurality of switches, so that different values of the equivalent resistance value of the resistance conversion circuit 320, namely, different values of the resistance value of the pile-side CC interface 312, correspond to the charging mode and the discharging mode of the electric vehicle 400. In this way, the electric vehicle 400 can determine, by detecting the resistance value of the pile-side CC interface 312, a charging/discharging mode to be executed, and then implement the charging function and the discharging function of the electric vehicle 400, for example, implement a V2V discharging function of the electric vehicle 400, through the charging/discharging device 300.

In addition, because the charging/discharging device 300 enables, by using different values of the resistance value of the pile-side CC interface 312, the electric vehicle 400 to determine a charging/discharging mode to be executed, during specific implementation, the charging/discharging device 300 may be directly equipped with a charging/discharging connector, and the pile-side CC interface 312 and the pile-side alternating-current interface 311 are disposed as a CC plug and an alternating-current plug in a charging/discharging connector plug. In this way, in comparison with a case in which a charging connector device is used during charging of the electric vehicle 400 and a discharging connector device is used during discharging, according to the charging/discharging device 300 provided in this embodiment of this application, device replacement can be avoided during charging/discharging of the electric vehicle 400, to simplify a charging/discharging operation of the electric vehicle 400. In addition, the charging/discharging device 300 provided in this embodiment of this application does not need to be equipped with both a charging connector device and a discharging connector device. This not only can reduce costs of the charging/discharging device 300, but also can reduce a size of the charging/discharging device 300, so that the charging/discharging device 300 can be carried in the vehicle.

Still as shown in FIG. 4, in some embodiments, to enable the charging/discharging device 300 to implement the charging function and different discharging functions of the electric vehicle 400, the charging/discharging device 300 may further include a power transmission line 330. The power transmission line 330 may be configured to transmit, to another electric vehicle connected to the charging/discharging device 300, an alternating current that is output by the electric vehicle 400 and that is received by the pile-side alternating-current interface 311, for example, transmit, to the electric vehicle 400b, an alternating current that is output by the electric vehicle 400a, to implement the V2V discharging function of the electric vehicle 400a and a charging function of the electric vehicle 400b. Specifically, pile-side alternating-current interfaces 311 in any two device interfaces 310 are connected through the power transmission line 330.

Alternatively, the power transmission line 330 may be further configured to transmit an alternating current from an alternating-current power grid to the electric vehicle 400 connected to the pile-side alternating-current interface 311, to implement the charging function of the electric vehicle 400. Alternatively, the power transmission line 330 may be further configured to transmit, to the alternating-current power grid, an alternating current that is output by the electric vehicle 400 and that is received by the pile-side alternating-current interface 311, to implement a V2G discharging function of the electric vehicle 400.

In the foregoing technical solution, the charging/discharging device 300 may implement, through the disposed power transmission line 330, both power transmission between the electric vehicle 400 and the another electric vehicle and power transmission between the alternating-current power grid and the electric vehicle 400, so that the electric vehicle 400 can implement the charging function, the V2G discharging function, and the V2V discharging function through the charging/discharging device 300, to meet charging/discharging requirements of the electric vehicle 400 in different scenarios. In addition, the electric vehicle 400 may receive cost-effective valley electricity from the alternating-current power grid 500 at night through the power transmission line 330, and provide, in the daytime for another electric vehicle that needs to be charged, electricity that is more cost-effective than peak electricity. This enables an owner of a discharging vehicle to make specific earnings, reduces charging costs of an owner of a charged vehicle, and relieves pressure of the power grid.

In addition, because the charging/discharging device 300 transmits alternating currents between the alternating-current power grid and the electric vehicle 400 and between the electric vehicle 400 and the another electric vehicle, the charging/discharging device 300 does not need to be equipped with a power conversion apparatus for converting an alternating current into a direct current. This can reduce a size of the charging/discharging device 300, so that the charging/discharging device 300 can be carried in the vehicle. In this way, the electric vehicle 400 can supply electric energy to another electric vehicle through the charging/discharging device 300 at any time in different scenarios, to make corresponding earnings.

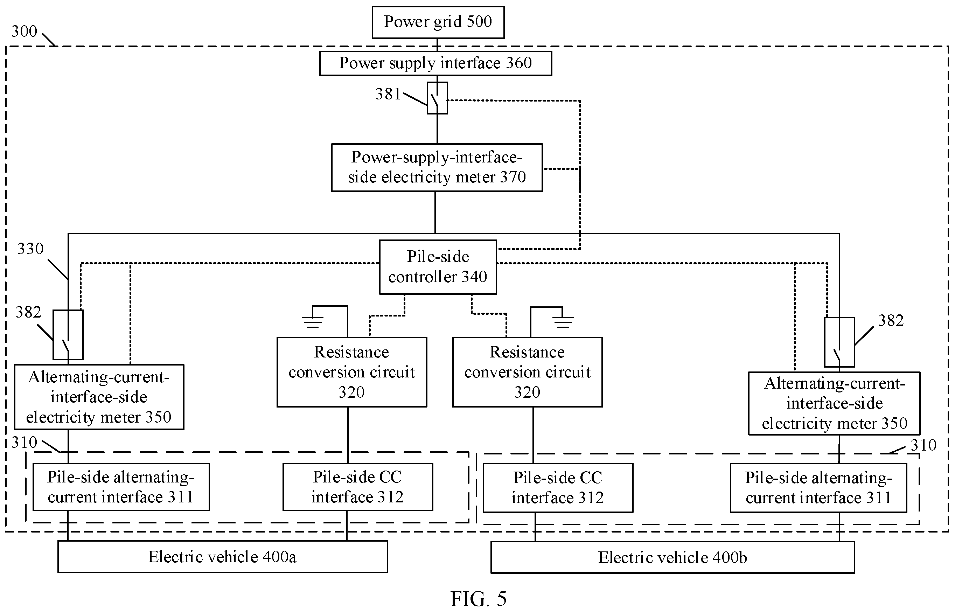

FIG. 5 is a diagram of a structure of another changing/discharging device 300 according to an embodiment of this application.

As shown in FIG. 5, in some embodiments, the charging/discharging device 300 may further include a power supply interface 360, and the power supply interface 360 is configured to connect to an alternating-current power grid 500. The power supply interface 360 is connected to a pile-side alternating-current interface 311 in each device interface 310 through a power transmission line 330, to implement power transmission between the alternating-current power grid 500 and the pile-side alternating-current interface 311. The power supply interface 360 may be specifically a power supply plug. If a scenario in which the charging/discharging device 300 is located includes a standard socket for connecting to the alternating-current power grid 500, the power supply plug is plug-connected to the standard socket to implement a connection between the charging/discharging device 300 and the alternating-current power grid 500.

Still as shown in FIG. 5, in some embodiments, to enable the power transmission line 330 to implement power transmission through different paths, the charging/discharging device 300 may further include a power-supply-interface-side switch 381 and a plurality of alternating-current-interface-side switches 382 that are disposed on the power transmission line 330. The power supply interface 360 is connected to the pile-side alternating-current interface 311 in each device interface 310 through the power-supply-interface-side switch 381. The plurality of alternating-current-interface-side switches 382 are in a one-to-one correspondence with a plurality of device interfaces 310. The pile-side alternating-current interface 311 in each device interface 310 is connected to a pile-side alternating-current interface 311 in another device interface 310 and the power supply interface 360 through a corresponding alternating-current-interface-side switch 382.

During specific implementation, the charging/discharging device 300 may further include a pile-side controller 340, and the pile-side controller 340 is connected to the power-supply-interface-side switch 381 and each alternating-current-interface-side switch 382. The pile-side controller 340 may be configured to control the power-supply-interface-side switch 381 and each alternating-current-interface-side switch 382 to be turned on or turned off, so that a power transmission line 330 between the power supply interface 360 and a pile-side alternating-current interface 311 in any device interface 310 is conducted or cut off, and/or a power transmission line 330 between pile-side alternating-current interfaces 311 in any two device interfaces 310 is conducted or cut off.

Still as shown in FIG. 5, in some embodiments, to help an electric vehicle 400 sell electric energy through the charging/discharging device 300, the charging/discharging device 300 may further include an alternating-current-interface-side electricity meter 350. The alternating-current-interface-side electricity meter 350 may be configured to measure an electric quantity of an alternating current that is output by the electric vehicle 400 and that is received by the pile-side alternating-current interface 311, or configured to measure an electric quantity of an alternating current that is output by the pile-side alternating-current interface 311 to the electric vehicle 400. In an example, there may be a plurality of alternating-current-interface-side electricity meters 350, the plurality of alternating-current-interface-side electricity meters 350 are in a one-to-one correspondence with the plurality of device interfaces 310, and each alternating-current-interface-side electricity meter 350 is connected to a pile-side alternating-current interface 311 in a corresponding device interface 310.

During specific implementation, the pile-side controller 340 may be connected to the alternating-current-interface-side electricity meter 350, to obtain the electric quantity of the alternating current that is measured by the alternating-current-interface-side electricity meter 350, to facilitate metering and charging of the electric quantity.

In the foregoing technical solution, when the electric vehicle 400 implements the V2G discharging function and the V2V discharging function through the charging/discharging device 300, the charging/discharging device 300 may measure, through the disposed alternating-current-interface-side electricity meter 350, quantities of electricity that is transmitted by the electric vehicle 400 to the alternating-current power grid 500 and another electric vehicle, to make corresponding earnings.

Still as shown in FIG. 5, in some other embodiments, the charging/discharging device 300 may further include a power-supply-interface-side electricity meter 370. The power-supply-interface-side electricity meter 370 is connected to the power supply interface 360. The power-supply-interface-side electricity meter 370 is configured to measure an electric quantity of an alternating current that is received by the power supply interface 360 from the alternating-current power grid 500, or is configured to measure an electric quantity of an alternating current that is output by the power supply interface 360 to the alternating-current power grid 500. During specific implementation, the pile-side controller 340 is connected to the power-supply-interface-side electricity meter 370, to obtain the electric quantity of the alternating current that is measured by the power-supply-interface-side electricity meter 370, to facilitate metering and charging of the electric quantity.

In the foregoing technical solution, when the electric vehicle 400 implements the V2G discharging function through the charging/discharging device 300, the charging/discharging device 300 may measure, through the disposed power-supply-interface-side electricity meter 370, a quantity of electricity that is transmitted by the electric vehicle 400 to the alternating-current power grid 500, to make corresponding earnings.

Still as shown in FIG. 5, during actual use of the charging/discharging device 300, to implement a charging function, the V2V discharging function, and the V2G discharging function of the electric vehicle 400, the pile-side controller 340 may be further connected to a resistance conversion circuit 320, to control an on/off state of a plurality of switches in the resistance conversion circuit 320, to adjust a value of an equivalent resistance value of the resistance conversion circuit 320.

In an example, the charging/discharging device 300 is connected to an electric vehicle 400a, and the pile-side controller 340 may be configured to:
in response to a charging request or a discharging request of the electric vehicle 400a, control the on/off state of the plurality of switches in the resistance conversion circuit 320, to adjust the equivalent resistance value of the resistance conversion circuit 320 to any one of a charging resistance value, a V2G discharging resistance value, a V2V discharging resistance value, and a vehicle-to-load (vehicle-to-load, V2L) discharging resistance value. The charging resistance value is used for the electric vehicle 400a to receive an alternating current output by the pile-side alternating-current interface 311. The V2G discharging resistance value is used for the electric vehicle 400a to output an alternating current to the pile-side alternating-current interface 311 in a V2G discharging mode. The V2V discharging resistance value is used for the electric vehicle 400a to output an alternating current to the pile-side alternating-current interface 311 in a V2V discharging mode. The V2L discharging resistance value is used for the electric vehicle 400a to output an alternating current to the pile-side alternating-current interface 311 in a V2L discharging mode.

Optionally, the charging/discharging device 300 may be provided with a human-computer interaction interface, and the pile-side controller 340 may receive an instruction that is input by a vehicle owner of the electric vehicle 400a on the human-computer interaction interface and that indicates the charging request or the discharging request of the electric vehicle 400a. Alternatively, the pile-side controller 340 may be communicatively connected to a terminal device (for example, a mobile phone or a tablet computer) through a cloud platform, to receive, through the cloud platform, an instruction that is input by the vehicle owner on the terminal device and that indicates the charging request or the discharging request of the electric vehicle 400a.

It can be understood that the charging request may indicate that the electric vehicle 400a requests to execute a charging mode to implement a charging function, and the discharging request may indicate any one of the following: The electric vehicle 400a requests to execute a V2G discharging mode to implement a V2G discharging function, the electric vehicle 400a requests to execute a V2V discharging mode to implement a V2V discharging function, and the electric vehicle 400a requests to execute a V2L discharging mode to implement a V2V discharging function.

Specifically, when the pile-side controller 340 receives the charging request from the electric vehicle 400a, the pile-side controller 340 adjusts the equivalent resistance value of the resistance conversion circuit 320 to the charging resistance value, in other words, adjusts a resistance value of a pile-side CC interface 312 to the charging resistance value, so that the electric vehicle 400a determines, by detecting the resistance value of the pile-side CC interface 312, to execute the charging mode. Then the pile-side controller 340 controls, to be transmitted to the electric vehicle 400a, an alternating current from the alternating-current power grid 500 and/or an alternating current that is output by another electric vehicle to the charging/discharging device 300, for example, an alternating current that is output by an electric vehicle 400b to the charging/discharging device 300, to implement the charging function of the electric vehicle 400a.

When the pile-side controller 340 receives, from the electric vehicle 400a, a discharging request for requesting to execute the V2G discharging mode to implement the V2G discharging function, the pile-side controller 340 adjusts the equivalent resistance value of the resistance conversion circuit 320 to the V2G discharging resistance value, so that the electric vehicle 400a determines, by detecting the resistance value of the pile-side CC interface 312, to execute the V2G discharging mode. Then the electric vehicle 400a outputs an alternating current to the pile-side alternating-current interface 311 by executing the V2G discharging mode, and the pile-side controller 340 controls the alternating current output by the electric vehicle 400a to be transmitted to the alternating-current power grid 500, to implement the V2G discharging function of the electric vehicle 400a.

When the pile-side controller 340 receives, from the electric vehicle 400a, a discharging request for requesting to execute the V2V discharging mode to implement the V2V discharging function, the pile-side controller 340 adjusts the equivalent resistance value of the resistance conversion circuit 320 to the V2V discharging resistance value, so that the electric vehicle 400a determines, by detecting the resistance value of the pile-side CC interface 312, to execute the V2V discharging mode. Then the electric vehicle 400a outputs an alternating current to the pile-side alternating-current interface 311 by executing the V2V discharging mode, and the pile-side controller 340 controls the alternating current output by the electric vehicle 400a to be transmitted to another electric vehicle connected to the charging/discharging device 300, for example, the electric vehicle 400b, to implement the V2V discharging function of the electric vehicle 400a.

When the pile-side controller 340 receives, from the electric vehicle 400a, a discharging request for requesting to execute the V2L discharging mode to implement the V2V discharging function, the pile-side controller 340 may adjust the equivalent resistance value of the resistance conversion circuit 320 to the V2L discharging resistance value, so that the electric vehicle 400a determines, by detecting the resistance value of the pile-side CC interface 312, to execute the V2L discharging mode. Then the electric vehicle 400a outputs an alternating current to the pile-side alternating-current interface 311 by executing the V2L discharging mode, and the pile-side controller 340 controls the alternating current output by the electric vehicle 400a to be transmitted to another electric vehicle connected to the charging/discharging device 300, for example, the electric vehicle 400b, to similarly implement the V2V discharging function of the electric vehicle 400a.

In the foregoing technical solution, the charging/discharging device 300 may adjust, according to a charging request or a discharging request of the electric vehicle 400, the equivalent resistance value of the resistance conversion circuit 320 connected to the pile-side CC interface 311, so that the electric vehicle 400 determines, by detecting the resistance value of the pile-side CC interface 312, to execute a corresponding charging mode or discharging mode. In addition, the electric vehicle 400 usually implements different discharging functions by executing different discharging modes. For example, when the electric vehicle 400 needs to discharge to another electric vehicle to implement the V2V discharging function, the electric vehicle 400 usually outputs an alternating current by executing the V2V discharging mode. In this embodiment of this application, even if the electric vehicle 400 does not have the V2V discharging mode, the charging/discharging device 300 may still adjust the resistance value of the pile-side CC interface 312 to the V2L discharging resistance value, to enable the electric vehicle 400 to output an alternating current to the pile-side alternating-current interface 311 based on the V2L discharging mode. The charging/discharging device 300 may further transmit, to another connected electric vehicle, the alternating current that is output by the electric vehicle 400 based on the V2L discharging mode, to implement the V2V discharging function of the electric vehicle 400.

It can be understood that, in the foregoing embodiments, that the equivalent resistance value of the resistance conversion circuit 320 is adjusted to four different equivalent resistance values including the charging resistance value, the V2G discharging resistance value, the V2V discharging resistance value, and the V2L discharging resistance value is merely an example. For example, in some other embodiments, the equivalent resistance value of the resistance conversion circuit 320 may alternatively be adjusted to two different resistance values including the charging resistance value and the V2V discharging resistance value.

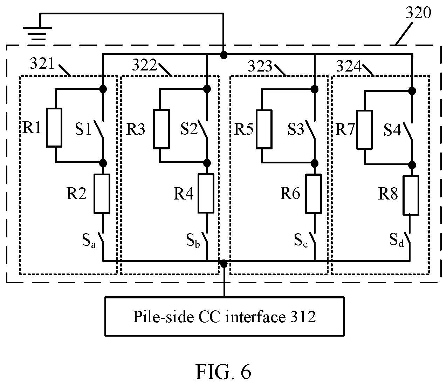

FIG. 6 shows an example of a specific circuit structure of a resistance conversion circuit 320 in which four different equivalent resistance values may be obtained through adjustment according to an embodiment of this application.

As shown in FIG. 6, the resistance conversion circuit 320 may include a charging resistor circuit 321, a V2G discharging resistor circuit 322, a V2L discharging resistor circuit 323, and a V2V discharging resistor circuit 324 that are connected in parallel between a pile-side CC interface 312 and a ground. The charging resistor circuit 321 includes a resistor R1, a resistor R2, a switch S1, and a switch Sₐ. The V2G discharging resistor circuit 322 includes a resistor R3, a resistor R4, a switch S2, and a switch Sₖ. The V2L discharging resistor circuit 323 includes a resistor R5, a resistor R6, a switch S3, and a switch S_{c}. The V2V discharging resistor circuit 324 includes a resistor R7, a resistor R8, a switch S4, and a switch S_{d}.

One end of the switch S1, one end of the switch S2, one end of the switch S3, and one end of the switch S4 are connected in parallel, to serve as one end of the resistance conversion circuit 320 and be grounded. The other end of the switch S1 is connected to one end of the switch Sₐ through the resistor R2, and the resistor R1 is connected to the switch S1 in parallel. The other end of the switch S2 is connected to one end of the switch S_{b} through the resistor R4, and the resistor R3 is connected to the switch S2 in parallel. The other end of the switch S3 is connected to one end of the switch S_{c} through the resistor R6, and the resistor R5 is connected to the switch S3 in parallel. The other end of the switch S4 is connected to one end of the switch S_{d} through the resistor R8, and the resistor R7 is connected to the switch S4 in parallel. The other end of Sₐ, the other end of the switch S_{b}, the other end of the switch S_{c}, and the other end of the switch S_{d} are connected in parallel, to serve as the other end of the resistance conversion circuit 320 and be connected to the pile-side CC interface 312.

During specific implementation, when a pile-side controller 340 adjusts an equivalent resistance value of the resistance conversion circuit 320 to a charging resistance value, the pile-side controller 340 controls the switches in the charging resistor circuit 321 to be turned on, and controls the switches in the V2G discharging resistor circuit 322, the V2L discharging resistor circuit 323, and the V2V discharging resistor circuit 324 to be turned off, to be specific, controls the switch S1 and the switch Sₐ to be turned on, and controls the switch S2, the switch S_{b}, the switch S3, the switch S_{c}, the switch S4, and the switch S_{d} to be turned off. In this case, the equivalent resistance value of the resistance conversion circuit 320 is the resistor R2. In other words, the charging resistance value is the resistor R2.

Similarly, when the pile-side controller 340 adjusts the equivalent resistance value of the resistance conversion circuit 320 to the V2G discharging resistance value, the pile-side controller 340 controls the switches in the V2G discharging resistor circuit 322 to be turned on, and controls the switches in the charging resistor circuit 321, the V2L discharging resistor circuit 323, and the V2V discharging resistor circuit 324 to be turned off. In this case, the equivalent resistance value of the resistance conversion circuit 320 is the resistor R4. In other words, the V2G discharging resistance value is the resistor R4.

When the pile-side controller 340 adjusts the equivalent resistance value of the resistance conversion circuit 320 to the V2L discharging resistance value, the pile-side controller 340 controls the switches in the V2L discharging resistor circuit 323 to be turned on, and controls the switches in the charging resistor circuit 321, the V2G discharging resistor circuit 322, and the V2V discharging resistor circuit 324 to be turned off. In this case, the equivalent resistance value of the resistance conversion circuit 320 is the resistor R6. In other words, the V2L discharging resistance value is the resistor R6.

When the pile-side controller 340 adjusts the equivalent resistance value of the resistance conversion circuit 320 to the V2V discharging resistance value, the pile-side controller 340 controls the switches in the V2V discharging resistor circuit 324 to be turned on, and controls the switches in the charging resistor circuit 321, the V2G discharging resistor circuit 322, and the V2L discharging resistor circuit 323 to be turned off. In this case, the equivalent resistance value of the resistance conversion circuit 320 is the resistor R8. In other words, the V2V discharging resistance value is the resistor R8.

Resistance values of the resistor R2, the resistor R4, the resistor R6, and the resistor R8 are different.

It can be understood that the foregoing specific circuit structure of the resistance conversion circuit 320 is merely an example. In this embodiment of this application, a circuit structure of the resistance conversion circuit 320 only needs to ensure that the equivalent resistance value of the resistance conversion circuit 320 can be adjusted to at least two different equivalent resistance values corresponding to the charging mode and the discharging mode of the electric vehicle 400.

The foregoing uses the electric vehicle 400a connected to the charging/discharging device 300 as an example to describe a specific process in which the electric vehicle 400a executes the charging mode, the V2V discharging mode, the V2L discharging mode, and the V2V discharging mode by detecting the resistance value of the pile-side CC interface 312. The following further uses the electric vehicle 400a and the electric vehicle 400b connected to the charging/discharging device 300 as an example to describe a specific process in which the charging/discharging device 300 implements the charging function, the V2G discharging function, and the V2V discharging function of the electric vehicle 400a.

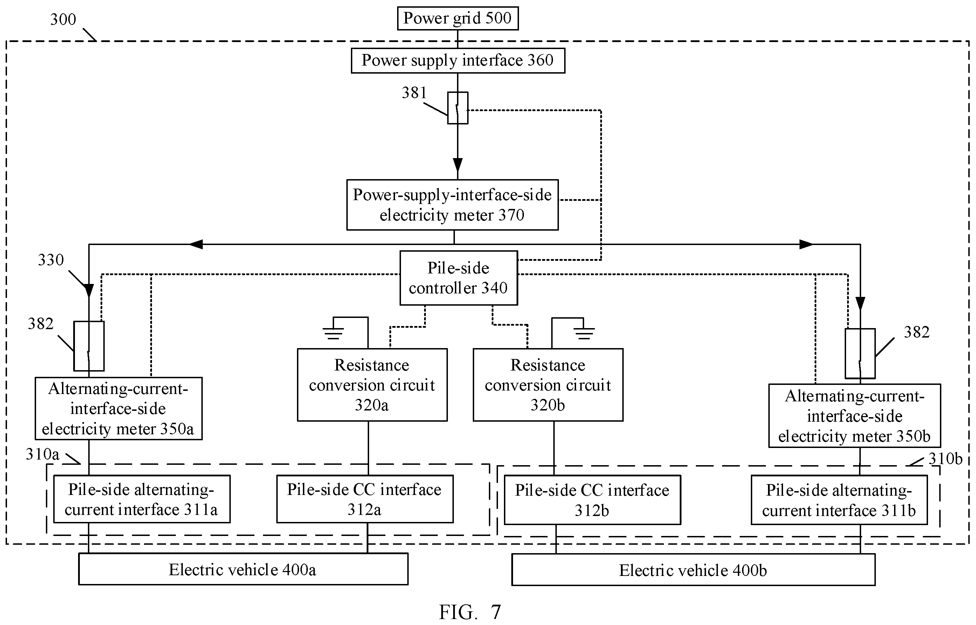

FIG. 7 is a diagram of a structure of an example charging/discharging device 300 according to an embodiment of this application.

As shown in FIG. 7, two device interfaces 310 of the charging/discharging device 300 are respectively connected to an electric vehicle 400a and an electric vehicle 400a. A device interface 310 connected to the electric vehicle 400a is denoted as 310a, and a device interface 310 connected to the electric vehicle 400b is denoted as a device interface 310b. Correspondingly, a pile-side alternating-current interface 311 and a pile-side CC interface 312 in the device interface 310a are respectively denoted as a pile-side alternating-current interface 311a and a pile-side CC interface 312a, and a pile-side alternating-current interface 311 and a pile-side CC interface 312 in the device interface 310b are respectively denoted as a pile-side alternating-current interface 311b and a pile-side CC interface 312b. An alternating-current-interface-side electricity meter 350 correspondingly connected to the pile-side alternating-current interface 311a is denoted as 350a, and an alternating-current-interface-side electricity meter 350 correspondingly connected to the pile-side alternating-current interface 311b is denoted as 350b. A resistance conversion circuit 320 connected to the pile-side CC interface 312a is denoted as a resistance conversion circuit 320a, and a resistance conversion circuit 320 connected to the pile-side CC interface 312b is denoted as a resistance conversion circuit 320b.

In some embodiments, a pile-side controller 340 may be configured to: when a power supply interface 360 is connected to an alternating-current power grid 500, in other words, when the charging/discharging device 300 is on-grid, in response to charging requests of the electric vehicle 400a and the electric vehicle 400b, adjust equivalent resistance values of the resistance conversion circuit 320a and the resistance conversion circuit 320b to a charging resistance value, in other words, adjust resistance values of the pile-side CC interface 312a and the pile-side CC interface 312b to the charging resistance value. In this way, the electric vehicle 400a and the electric vehicle 400b execute charging modes based on the resistance values of the pile-side CC interface 312a and the pile-side CC interface 312b respectively.

Further, in some embodiments, the pile-side controller 340 is further configured to control an alternating current from the alternating-current power grid 500 to be transmitted to the electric vehicle 400a and the electric vehicle 400b through the pile-side alternating-current interface 311a and the pile-side alternating-current interface 311b respectively, to implement charging functions of the electric vehicle 400a and the electric vehicle 400b.

During specific implementation, the pile-side controller 340 may be specifically configured to control a power-supply-interface-side switch 381, an alternating-current-interface-side switch 382 correspondingly connected to the pile-side alternating-current interface 311a, and an alternating-current-interface-side switch 382 correspondingly connected to the pile-side alternating-current interface 311b to be turned on, so that a power transmission line 330 between the power supply interface 360 and the pile-side alternating-current interface 311a is connected, and a power transmission line 330 between the power supply interface 360 and the pile-side alternating-current interface 311b is conducted, to facilitate power transmission between the alternating-current power grid 500 and the electric vehicle 400a and between the alternating-current power grid 500 and the electric vehicle 400.

In the foregoing embodiment, a power-supply-interface-side electricity meter 370 is configured to measure a quantity of electricity that is input from the external power grid 500 to the charging/discharging device 300, and the alternating-current-interface-side electricity meter 350a and the alternating-current-interface-side electricity meter 350b are respectively configured to measure electric quantities of alternating currents that are output by the charging/discharging device 300 to the electric vehicle 400a and the electric vehicle 400b. An electric quantity of an alternating current that is measured by the power-supply-interface-side electricity meter 370 = an electric quantity of an alternating current that is measured by the alternating-current-interface-side electricity meter 350a + an electric quantity of an alternating current that is measured by the alternating-current-interface-side electricity meter 350b.

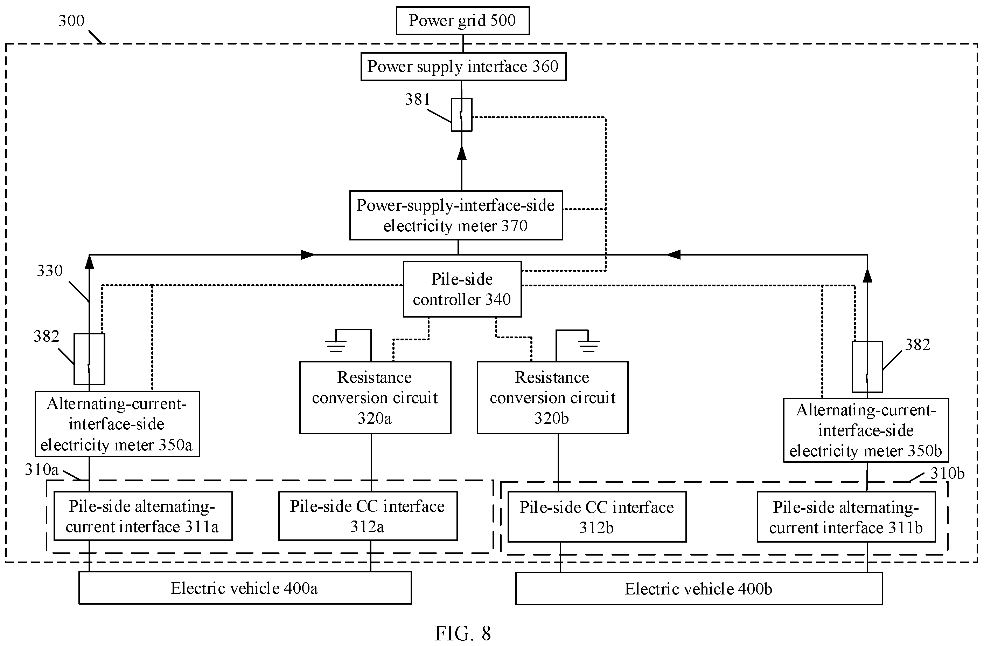

FIG. 8 is a diagram of a structure of another example charging/discharging device 300 according to an embodiment of this application.

A difference from the embodiment shown in FIG. 7 lies in: In the embodiment shown in FIG. 8, a pile-side controller 340 may be configured to: when a power supply interface 360 is connected to an alternating-current power grid 500, in other words, when the charging/discharging device 300 is on-grid, in response to discharging requests of an electric vehicle 400a and an electric vehicle 400b for requesting to execute a V2G discharging mode, adjust equivalent resistance values of a resistance conversion circuit 320a and a resistance conversion circuit 320b to a V2G discharging resistance value. In this way, the electric vehicle 400a and the electric vehicle 400b execute V2G discharging modes based on resistance values of a pile-side CC interface 312a and a pile-side CC interface 312b respectively.

Further, in some embodiments, the pile-side controller 340 is further configured to control, to be transmitted to the alternating-current power grid 500 through the power supply interface 360, an alternating current that is output by the electric vehicle 400a and that is received by a pile-side alternating-current interface 311a and an alternating current that is output by the electric vehicle 400b and that is received by a pile-side alternating-current interface 311b, to implement V2G discharging functions of the electric vehicle 400a and the electric vehicle 400b.

In the foregoing embodiment, a power-supply-interface-side electricity meter 370 is configured to measure a quantity of electricity that is input from the charging/discharging device 300 to the alternating-current power grid 500, and an alternating-current-interface-side electricity meter 350a and an alternating-current-interface-side electricity meter 350b are respectively configured to measure electric quantities of alternating currents that are output by the electric vehicle 400a and the electric vehicle 400b to the charging/discharging device 300. An electric quantity measured by the power-supply-interface-side electricity meter 370 = an electric quantity of an alternating current that is measured by the alternating-current-interface-side electricity meter 350a + an electric quantity of an alternating current that is measured by the alternating-current-interface-side electricity meter 350b.

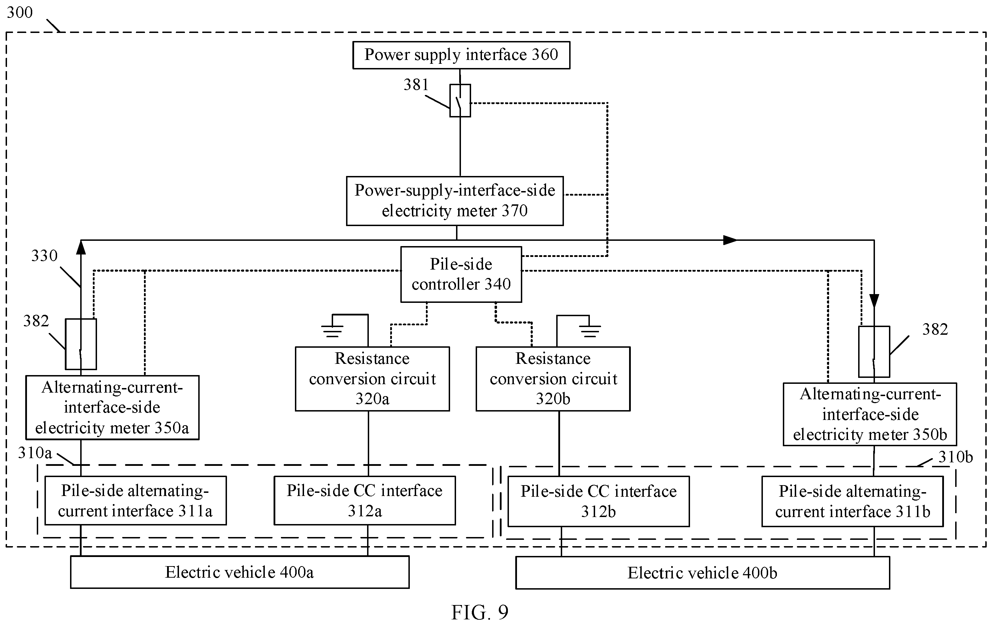

FIG. 9 is a diagram of a structure of another example charging/discharging device 300 according to an embodiment of this application.

A difference from the embodiments shown in FIG. 7 and FIG. 8 lies in: In the embodiment shown in FIG. 9, a controller 310 may be configured to: when a power supply interface 360 is not connected to an alternating-current power grid 500, in other words, when the charging/discharging device 300 is off-grid, in response to a discharging request of an electric vehicle 400a for requesting to execute a V2V discharging mode (or a discharging request for requesting to execute a V2L discharging mode) and a charging request of an electric vehicle 400b, adjust an equivalent resistance value of a resistance conversion circuit 320a to a V2V discharging resistance value (or a V2L discharging resistance value), and adjust an equivalent resistance value of a resistance conversion circuit 320b to a charging resistance value. Therefore, the electric vehicle 400a executes the V2V discharging mode (or executes the V2L discharging mode) based on a resistance value of a pile-side CC interface 312a, and the electric vehicle 400b executes the charging mode based on a resistance value of a pile-side CC interface 312b.

Further, in some embodiments, the pile-side controller 340 is further configured to control, to be transmitted to the electric vehicle 400b through a pile-side alternating-current interface 311b, an alternating current that is output by the electric vehicle 400a and that is received by a pile-side alternating-current interface 311a, to implement a V2V discharging function of the electric vehicle 400a and a charging function of the electric vehicle 400b.

During specific implementation, the pile-side controller 340 may be specifically configured to control an alternating-current-interface-side switch 382 correspondingly connected to the pile-side alternating-current interface 311a and an alternating-current-interface-side switch 382 correspondingly connected to the pile-side alternating-current interface 311b to be turned on, so that a power transmission line 330 between the pile-side alternating-current interface 311a and the pile-side alternating-current interface 311b is conducted, to facilitate power transmission between the electric vehicle 400a and the electric vehicle 400b.

In the foregoing embodiment, an alternating-current-interface-side electricity meter 350a is configured to measure an electric quantity of an alternating current that is output by the electric vehicle 400a to the charging/discharging device 300, and an alternating-current-interface-side electricity meter 350b is configured to measure an electric quantity of an alternating current that is output by the charging/discharging device 300 to the electric vehicle 400b. The electric quantity of the alternating current that is measured by the alternating-current-interface-side electricity meter 350a = the electric quantity of the alternating current that is measured by the alternating-current-interface-side electricity meter 350b.

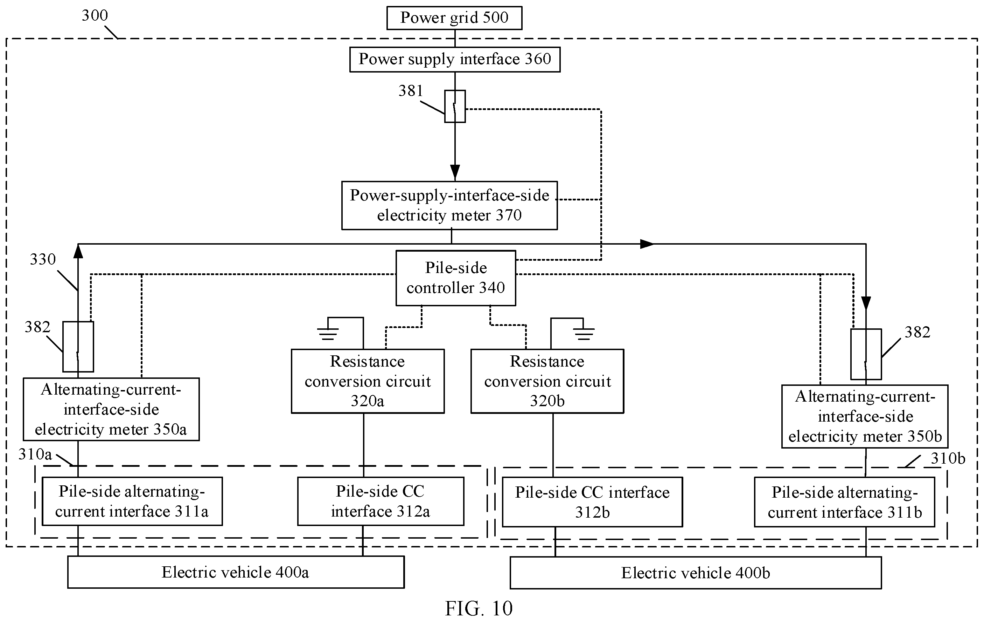

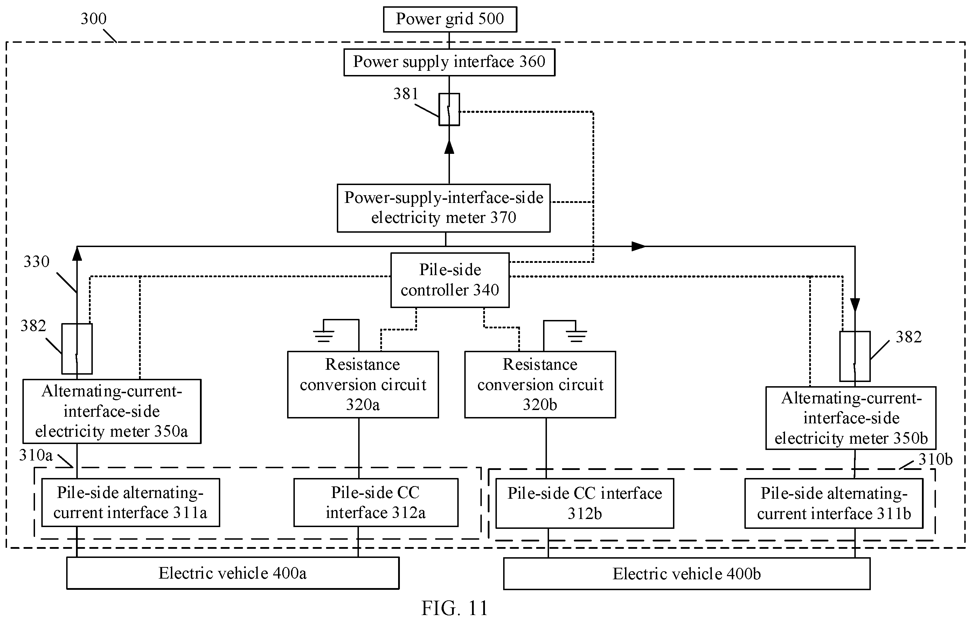

FIG. 10 and FIG. 11 each are a specific diagram of another example charging/discharging device 300 according to an embodiment of this application.

A difference from the embodiments shown in FIG. 7 to FIG. 9 lies in: In the embodiments shown in FIG. 10 and FIG. 11, a pile-side controller 340 may be configured to: when a power supply interface 360 is connected to an alternating-current power grid 500, in other words, when the charging/discharging device 300 is on-grid, in response to a discharging request of an electric vehicle 400a for requesting to execute a V2V discharging mode (or a discharging request for requesting to execute a V2L discharging mode) and a charging request of an electric vehicle 400b, adjust an equivalent resistance value of a resistance conversion circuit 320a to a V2V discharging resistance value (or a V2L discharging resistance value), and adjust an equivalent resistance value of a resistance conversion circuit 320b to a charging resistance value. Therefore, the electric vehicle 400a executes the V2V discharging mode (or executes the V2L discharging mode) based on a resistance value of a pile-side CC interface 312a, and the electric vehicle 400b executes the charging mode based on a resistance value of a pile-side CC interface 312b.

Further, in some embodiments, as shown in FIG. 10, the pile-side controller 340 may be further configured to: when a pile-side alternating-current interface 311a receives an alternating current that is output by the electric vehicle 400a by executing the V2L discharging mode or the V2V discharging mode, and the charging/discharging device 300 outputs an alternating current to the electric vehicle 400b, in response to an electric quantity of the alternating current that is output by the electric vehicle 400a and that is received by the pile-side alternating-current interface 311a being less than a quantity of electricity that is needed for charging and that is output by the electric vehicle 400a, control, to be transmitted to the electric vehicle 400b through a pile-side alternating-current interface 311b, an alternating current from the alternating-current power grid 500 and the alternating current received by the pile-side alternating-current interface 311a.

Alternatively, in some other embodiments, as shown in FIG. 11, the pile-side controller 340 may be further configured to: when a pile-side alternating-current interface 311a receives an alternating current that is output by the electric vehicle 400a by executing the V2L discharging mode or the V2V discharging mode, and the charging/discharging device 300 outputs an alternating current to the electric vehicle 400b, in response to an electric quantity of the alternating current that is output by the electric vehicle 400a and that is received by the pile-side alternating-current interface 311a being greater than a quantity of electricity that is needed for charging and that is output by the electric vehicle 400a, control the alternating current received by the pile-side alternating-current interface 311a to be transmitted to the alternating-current power grid 500 and transmitted, through a pile-side alternating-current interface 311b, to the electric vehicle 400b.

Specifically, the pile-side controller 340 may be configured to receive a maximum output electric quantity PWM signal sent by the electric vehicle 400a and a charging requirement pulse width modulation (pulse width modulation, PWM) signal sent by the electric vehicle 400b. The maximum output electric quantity PWM signal indicates a maximum output alternating-current electric quantity of the electric vehicle 400a, and the charging requirement PWM signal indicates the electric quantity needed for charging the electric vehicle 400b. Further, the pile-side controller 340 may determine, based on the maximum output electric quantity PWM signal and the charging requirement PWM signal, a relative relationship between the electric quantity of the alternating current output by the electric vehicle 400a and a charging electric quantity needed by the electric vehicle 400b, to determine whether to further use the alternating-current power grid 500 to meet a charging requirement of the electric vehicle 400b.

For example, the pile-side controller 340 may be further configured to: when the electric quantity of the alternating current output by the electric vehicle 400a is less than the charging electric quantity needed by the electric vehicle 400b, control a power-supply-interface-side switch 381, an alternating-current-interface-side switch 382 correspondingly connected to the pile-side alternating-current interface 311a, and an alternating-current-interface-side switch 382 correspondingly connected to the pile-side alternating-current interface 311b to be turned on, so that a power transmission line 330 between the pile-side alternating-current interface 311a and the pile-side alternating-current interface 311b, and a power transmission line 330 between the power supply interface 360 and the pile-side alternating-current interface 311b are conducted. Further, the pile-side controller 340 may control, to be transmitted to the electric vehicle 400b connected to the pile-side alternating-current interface 311b, the alternating current output by the electric vehicle 400a and the alternating current output by the alternating-current power grid 500, to meet the charging requirement of the electric vehicle 400b.

In the foregoing embodiment, a power-supply-interface-side electricity meter 370 is configured to measure an electric quantity of an alternating current that is input from the alternating-current power grid 500 to the charging/discharging device 300, an alternating-current-interface-side electricity meter 350a is configured to measure an electric quantity of an alternating current that is output by the electric vehicle 400a to the charging/discharging device 300, and an alternating-current-interface-side electricity meter 350b is configured to measure an electric quantity of an alternating current that is output by the charging/discharging device 300 to the electric vehicle 400b. The electric quantity of the alternating current that is measured by the power-supply-interface-side electricity meter 370 + the electric quantity of the alternating current that is measured by the alternating-current-interface-side electricity meter 350a = the electric quantity of the alternating current that is measured by the alternating-current-interface-side electricity meter 350b.

Alternatively, the pile-side controller 340 may be further configured to: when the electric quantity of the alternating current output by the electric vehicle 400a is greater than the charging electric quantity needed by the electric vehicle 400b, control a power-supply-interface-side switch 381, an alternating-current-interface-side switch 382 correspondingly connected to the pile-side alternating-current interface 311a, and an alternating-current-interface-side switch 382 correspondingly connected to the pile-side alternating-current interface 311b to be turned on, so that a power transmission line 330 between the pile-side alternating-current interface 311a and the pile-side alternating-current interface 311b, and a power transmission line 330 between the power supply interface 360 and the pile-side alternating-current interface 311a are conducted. Further, the pile-side controller 340 may control the alternating current output by the electric vehicle 400a to be transmitted to the alternating-current power grid connected to the power supply interface 360 and the electric vehicle 400b connected to the pile-side alternating-current interface 311b, to meet the charging requirement of the electric vehicle 400b.

In the foregoing embodiment, a power-supply-interface-side electricity meter 370 is configured to measure an electric quantity of an alternating current that is input from the charging/discharging device 300 to the alternating-current power grid 500, an alternating-current-interface-side electricity meter 350a is configured to measure an electric quantity of an alternating current that is output by the electric vehicle 400a to the charging/discharging device 300, and an alternating-current-interface-side electricity meter 350b is configured to measure an electric quantity of an alternating current that is output by the charging/discharging device 300 to the electric vehicle 400b. The electric quantity of the alternating current that is measured by the alternating-current-interface-side electricity meter 350a = the electric quantity of the alternating current that is measured by the power-supply-interface-side electricity meter 370 + the electric quantity of the alternating current that is measured by the alternating-current-interface-side electricity meter 350b.

In the foregoing technical solution, when the charging/discharging device 300 is connected to the alternating-current power grid 500 and the electric vehicle 400 supplies electric energy to another electric vehicle through the charging/discharging device 300, based on a difference between an electric quantity of an alternating current that can be provided by the electric vehicle 400 and an electric quantity needed for charging the another electric vehicle, the charging/discharging device 300 may further use power transmission between the charging/discharging device 300 and the alternating-current power grid 500 to make an electric quantity of an alternating current transmitted by the electric vehicle 400 to the another electric vehicle through the charging/discharging device 300 meet the electric quantity needed for charging the another electric vehicle.

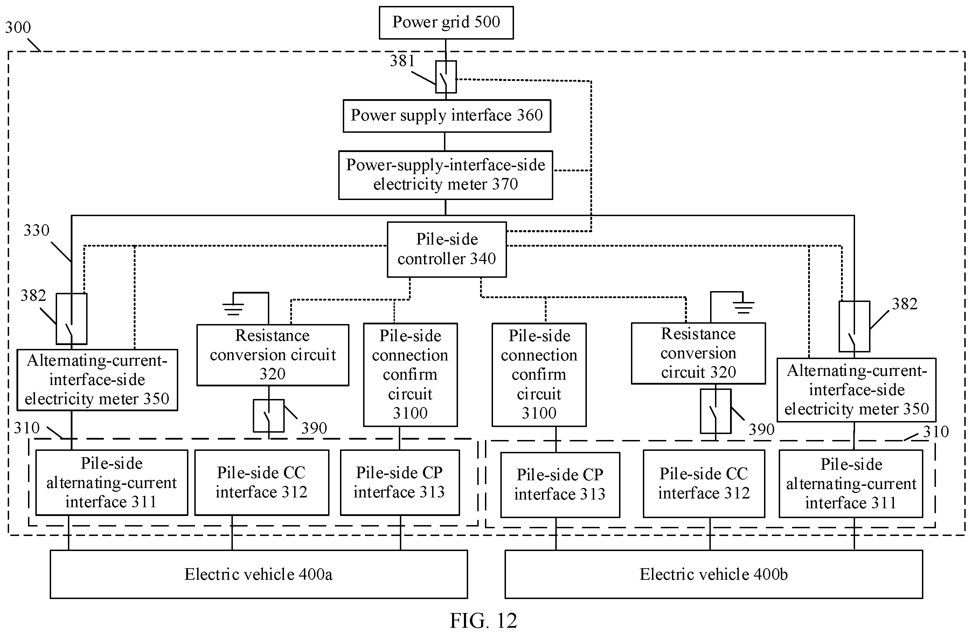

FIG. 12 is a diagram of a structure of another changing/discharging device 300 according to an embodiment of this application. It should be understood that the embodiment shown in FIG. 12 includes most technical features of the embodiments shown in FIG. 4 to FIG. 11. The following mainly describes a difference between the embodiment shown in FIG. 12 and the embodiments shown in FIG. 4 to FIG. 11.

As shown in FIG. 12, in some embodiments, the charging/discharging device 300 may further include a switch unit 390 and a pile-side control pilot (control pilot, CP) interface 313. One end of a resistance conversion circuit 320 is grounded, and the other end is connected to a pile-side CC interface 312 through the switch unit 390. The switch unit 390 is configured to cut off or conduct a connection between the other end of the resistance conversion circuit 320 and the pile-side CC interface 312. The pile-side CP interface 313 is configured to connect to an electric vehicle 400. The pile-side CP interface 313 may be specifically disposed in each device interface 310. A pile-side controller 340 is connected to the switch unit 390 and the pile-side CP interface 313.

In some embodiments, for example, the charging/discharging device 300 is connected to an electric vehicle 400a, and the pile-side controller 340 may be further configured to:
when all of a pile-side alternating-current interface 311, the pile-side CC interface 312, and the pile-side CP interface 313 are connected to the electric vehicle 400a, adjust an equivalent resistance value of the resistance conversion circuit 320;
control the switch unit 390 to cut off the connection between the other end of the resistance conversion circuit 320 and the pile-side CC interface 312; and
in response to a change in a voltage value of the pile-side CP interface 313, control the switch unit 390 to conduct the connection between the other end of the resistance conversion circuit 320 and the pile-side CC interface 312, to enable the electric vehicle 400a to detect an adjusted equivalent resistance value of the resistance conversion circuit 320 through the pile-side CC interface 312.

Specifically, during charging or discharging of the electric vehicle 400a through the charging/discharging device 300, if a charging/discharging mode executed by the electric vehicle 400a needs to be changed, for example, when the electric vehicle 400a determines, by detecting the equivalent resistance value of the resistance conversion circuit 320, to execute a charging mode, if the electric vehicle 400a needs to change to executing a V2V discharging mode, the pile-side controller 340 needs to adjust the equivalent resistance value of the resistance conversion circuit 320 from a current charging resistance value to a V2V discharging resistance value, to be specific, adjust a resistance value of the pile-side CC interface 312 connected to the resistance conversion circuit 320 from the current charging resistance value to the V2V discharging resistance value.

It can be understood that, because the electric vehicle 400a usually can detect the V2V discharging resistance value only when the resistance value of the pile-side CC interface 312 changes from infinity to the V2V discharging resistance value, after adjusting the equivalent resistance value of the resistance conversion circuit 320 from the current charging resistance value to the V2V discharging resistance value, the pile-side controller 340 may first control the switch unit 390 to cut off the connection between the other end of the resistance conversion circuit 320 and the pile-side CC interface 312, so that the resistance value of the pile-side CC interface 312 becomes infinite.

When the electric vehicle 400a detects that the resistance value of the pile-side CC interface 312 is infinite, the electric vehicle 400a may adjust a voltage value of the pile-side CP interface 313 in response. Further, the charging/discharging device 300 determines, based on detecting the change in the voltage value of the pile-side CP interface 313, that the electric vehicle 400a has detected that the resistance value of the pile-side CC interface 312 is infinite, and then controls the switch unit 390 to conduct the connection between the other end of the resistance conversion circuit 320 and the pile-side CC interface 312, so that the resistance value of the pile-side CC interface 312 changes from infinity to the adjusted equivalent resistance value of the resistance conversion circuit 320, in other words, changes to the V2V discharging resistance value. Therefore, after the connection between the other end of the resistance conversion circuit 320 and the pile-side CC interface 312 is conducted again, based on that the resistance value of the pile-side CC interface 312 changes from infinity to the V2V discharging resistance value, the electric vehicle 400a can detect that the resistance value of the pile-side CC interface 312 is the V2V discharging resistance value in this case, and then determine to execute the V2V discharging mode.

In the foregoing technical solution, when the electric vehicle 400 is connected to the charging/discharging device 300 and the electric vehicle 400 needs to change an executed charging/discharging mode through the charging/discharging device 300, the charging/discharging device 300 may first adjust a value of the equivalent resistance value of the resistance conversion circuit 320 to a resistance value corresponding to a changed charging/discharging mode, and then enable, through the switch unit 390, the resistance value of the pile-side CC interface 312 to change from infinity to the adjusted equivalent resistance value of the resistance conversion circuit 320. In this way, after the connection between the resistance conversion circuit 320 and the pile-side CC interface 312 is conducted again, based on a process in which the resistance value of the pile-side CC interface 312 changes from infinity to the adjusted equivalent resistance value of the resistance conversion circuit 320, the electric vehicle 400 can detect the resistance value of the pile-side CC interface 312, in other words, detect the adjusted equivalent resistance value of the resistance conversion circuit 320, and change the charging/discharging mode based on the adjusted equivalent resistance value of the resistance conversion circuit 320.

Still as shown in FIG. 12, in some embodiments, the charging/discharging device 300 may further include a pile-side connection confirm circuit 3100. The pile-side connection confirm circuit 3100 is connected to the pile-side CP interface 313, and the pile-side connection confirm circuit 3100 is configured to adjust a voltage of the pile-side CP interface 313. During specific implementation, there may be a plurality of pile-side connection confirm circuits 3100, the plurality of pile-side connection confirm circuits 3100 are in a one-to-one correspondence with a plurality of device interfaces 310, and each pile-side connection confirm circuit 3100 is connected to a pile-side CP interface 313 in a corresponding device interface 310.

In some embodiments, for example, the charging/discharging device 300 is connected to the electric vehicle 400a, and that the pile-side controller 340 is configured to: in response to the change in the voltage value of the pile-side CP interface 313, control the switch unit 390 to conduct the connection between the other end of the resistance conversion circuit 320 and the pile-side CC interface 312, to enable the electric vehicle 400a to detect the adjusted equivalent resistance value of the resistance conversion circuit 320 through the pile-side CC interface 312 includes:

The pile-side controller 340 is configured to:
in response to detecting the change in the voltage value of the pile-side CP interface 313, control the pile-side connection confirm circuit 3100 to adjust the voltage value of the pile-side CP interface 313, to enable the electric vehicle 400a to determine, based on the voltage value of the pile-side CP interface 313, to detect the adjusted equivalent resistance value of the resistance conversion circuit 320 through the pile-side CC interface 312; and
control the switch unit 390 to conduct the connection between the other end of the resistance conversion circuit 320 and the pile-side CC interface 312, to enable the electric vehicle 400a to detect the adjusted equivalent resistance value of the resistance conversion circuit 320 through the pile-side CC interface 312.

Specifically, in a process in which the electric vehicle 400a changes from a currently executed charging mode to the V2V discharging mode, when the pile-side controller 340 determines, based on detecting the change in the voltage value of the pile-side CP interface 313, that the electric vehicle 400a has detected that the resistance value of the pile-side CC interface 312 is infinite, the pile-side controller 340 may first adjust the voltage value of the pile-side CP interface 313 through the pile-side connection confirm circuit 3100, to simulate a process of disconnection and reconnection between the pile-side CP interface 313 and the electric vehicle 400a. To be specific, during specific implementation, the pile-side CP interface 313 is a CP plug in a charging/discharging connector plug, and the pile-side controller 340 adjusts a voltage value of the CP plug through the pile-side connection confirm circuit 3100, to simulate a process of removing the charging/discharging connector plug from the electric vehicle 400a and then re-inserting the charging/discharging connector plug into the electric vehicle 400a. Then the pile-side controller 340 conducts the connection between the resistance conversion circuit 320 and the pile-side CC interface 312 through the switch unit 390 again, so that the resistance value of the pile-side CC interface 312 changes from infinity to the adjusted equivalent resistance value of the resistance conversion circuit 320, that is, the V2V discharging resistance value.

In this way, after the connection between the resistance conversion circuit 320 and the pile-side CC interface 312 is conducted again, the electric vehicle 400a can re-detect the resistance value of the pile-side CC interface 312, in other words, re-detect the adjusted equivalent resistance value of the resistance conversion circuit 320, based on the simulated re-insertion of a charging/discharging connector, and change the charging/discharging mode based on the adjusted equivalent resistance value of the resistance conversion circuit 320.

It should be understood that a specific process of adjusting the voltage value of the pile-side CP interface 313 through the pile-side connection confirm circuit 3100 to simulate disconnection and reconnection between the pile-side CP interface 313 and the electric vehicle 400a is described below. The foregoing is merely a brief description.

In the foregoing technical solution, the process of disconnection and reconnection between the pile-side CP interface 313 and the electric vehicle 400a is simulated, to simulate the process of removing the charging/discharging connector from the electric vehicle 400a and then re-inserting the charging/discharging connector into the electric vehicle 400a. This helps avoid the following case: When the switch unit 390 cuts off the connection between the resistance conversion circuit 320 and the pile-side CC interface 312, the electric vehicle 400a mistakenly considers that a connection between the pile-side CC interface 312 and the electric vehicle 400a fails, and therefore no longer detects the resistance value of the pile-side CC interface 312.

It should be noted that the pile-side alternating-current interface 311, the pile-side CC interface 312, the pile-side CP interface 313, the pile-side controller 340, and the pile-side connection confirm circuit 3100 in the charging/discharging device 300 described in the foregoing embodiment may also be referred to as an alternating-current interface, a CC interface, a CP interface, and a controller respectively.

The foregoing describes the charging/discharging device 300 provided in embodiments of this application with reference to the accompanying drawings. The following describes, with reference to the accompanying drawings, a charging/discharging system including the charging/discharging device 300 provided in embodiments of this application.

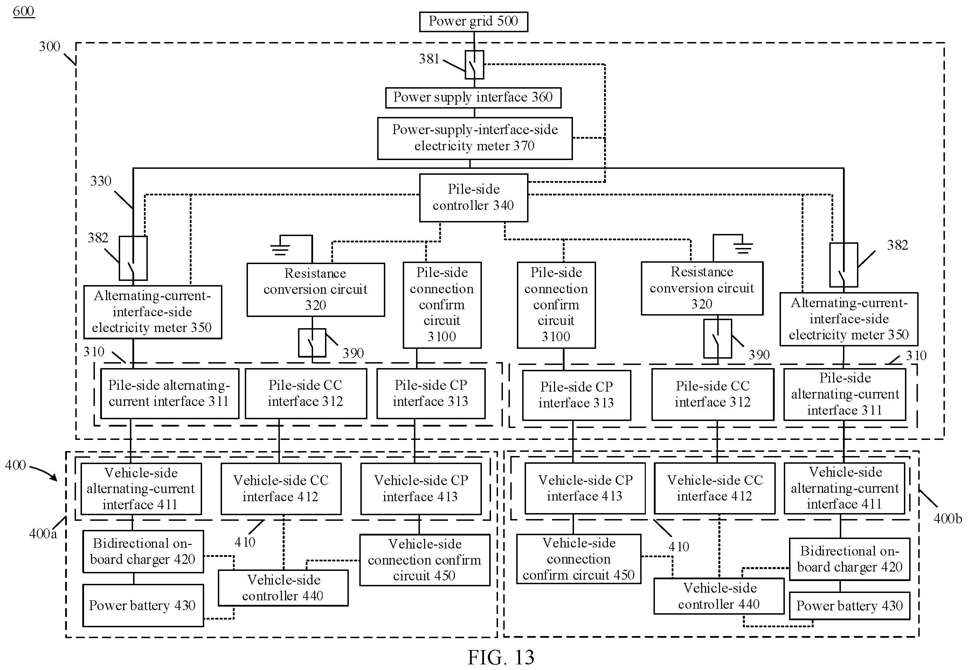

FIG. 13 is a diagram of a structure of a charging/discharging system 600 according to an embodiment of this application.

As shown in FIG. 13, the charging/discharging system 600 includes the charging/discharging device 300 and the electric vehicle 400 described in the foregoing embodiments.

The charging/discharging device 300 may include a pile-side alternating-current interface 311, a CC interface 312, and a resistance conversion circuit 320. The electric vehicle 400 may include a vehicle-side alternating-current interface 411 and a vehicle-side CC interface 412. One end of the resistance conversion circuit 320 is grounded, and the other end is connected to the pile-side CC interface 312. The pile-side alternating-current interface 311 is configured to connect to the vehicle-side alternating-current interface 411, and the pile-side CC interface 312 is configured to connect to the vehicle-side CC interface 412.

Specifically, the charging/discharging device 300 may include a plurality of device interfaces 310, and the pile-side alternating-current interface 311 and the pile-side CC interface 312 are disposed in each device interface 310. The electric vehicle 400 may include a vehicle interface 410. The vehicle-side alternating-current interface 411 and the vehicle-side CC interface 412 are disposed in the vehicle interface 410. Each device interface 310 is configured to connect to the vehicle interface 410 of the electric vehicle 400.

In an example, each device interface 310 may further include a pile-side PE interface, the vehicle interface 410 includes a vehicle-side PE interface (not shown in the figure), and the pile-side PE interface is configured to connect to the vehicle-side PE interface. For related descriptions of the pile-side PE interface, refer to related descriptions in the embodiment shown in FIG. 4. Details are not described herein again.

For example, the charging/discharging device 300 may include a plurality of charging/discharging connectors. The device interface 310 may be a charging/discharging connector plug in the charging/discharging connector. The pile-side alternating-current interface 311, the pile-side CC interface 312, and the pile-side PE interface are an alternating-current plug, a CC plug, and a PE plug in the charging/discharging connector plug. Correspondingly, the vehicle interface 410 may be a vehicle socket disposed in the electric vehicle 400. The vehicle-side alternating-current interface 411, the vehicle-side CC interface 412, and the vehicle-side PE interface are an alternating-current socket, a CC socket, and a PE socket in the vehicle socket, and are configured to plug-connect to corresponding plugs in the charging/discharging connector plug.

The resistance conversion circuit 320 includes a plurality of switches and a plurality of resistors. The plurality of switches are configured to adjust an equivalent resistance value of the resistance conversion circuit 320. The equivalent resistance value of the resistance conversion circuit 320 is used for the vehicle-side alternating-current interface 411 to output an alternating current to the pile-side alternating-current interface 311, or is used for the vehicle-side alternating-current interface 411 to receive an alternating current output by the pile-side alternating-current interface 311.

It can be understood that, in this embodiment of this application, the equivalent resistance value of the resistance conversion circuit 320 may also be a resistance value of the pile-side CC interface 311 connected to the resistance conversion circuit 320. In addition, when the pile-side CC interface 311 is connected to the vehicle-side CC interface 412, the resistance value of the pile-side CC interface 311 is the same as a resistance value of the vehicle-side CC interface 412. In other words, when the pile-side CC interface is connected to the vehicle-side CC interface 412, both the resistance value of the pile-side CC interface 311 and the resistance value of the vehicle-side CC interface 412 are the equivalent resistance value of the resistance conversion circuit 320.

It can be further understood that, in this embodiment of this application, different values of the equivalent resistance value of the resistance conversion circuit 320, namely, different values of the resistance value of the pile-side CC interface 312, in the charging/discharging device 300 correspond to a charging mode and a discharging mode of the electric vehicle 400. For specific descriptions, refer to related descriptions in the embodiments shown in FIG. 4 to FIG. 12. Details are not described herein again.

During specific implementation, as shown in FIG. 13, the electric vehicle 400 may include a bidirectional on-board charger 420, a power battery 430, and a vehicle-side controller 440. The bidirectional on-board charger 420 is connected to the power battery 430, and the vehicle-side controller 440 is connected to the bidirectional on-board charger 420, the power battery 430, and the vehicle-side CC interface 412. The vehicle-side controller 440 may be configured to detect the resistance value of the vehicle-side CC interface 412, to determine the resistance value of the pile-side CC interface 312 connected to the vehicle-side CC interface 412, to determine to execute the charging mode or the discharging mode. The bidirectional on-board charger 420 may be configured to convert an alternating current output by the charging/discharging device 300 into a direct current applicable to the power battery 430, to charge the power battery 430, to implement a charging function of the electric vehicle 400. Alternatively, the bidirectional on-board charger 420 may be configured to convert a direct current stored in the power battery 430 into an alternating current, and then output the alternating current to the charging/discharging device 300, to implement a discharging function, for example, a V2V discharging function, of the electric vehicle 400.

In some embodiments, the charging/discharging device 300 may further include a pile-side controller 340, a switch unit 390, and a pile-side CP interface 313, and the electric vehicle 400 may further include a vehicle-side CP interface 413. One end of the resistance conversion circuit 320 is grounded, and the other end is connected to the pile-side CC interface 312 through the switch unit 390. The switch unit 390 is configured to cut off or conduct a connection between the other end of the resistance conversion circuit 320 and the pile-side CC interface 312. The pile-side CP interface 313 is configured to connect to the vehicle-side CP interface 413. The pile-side CP interface 313 may be specifically disposed in each device interface 310, and the vehicle-side CP interface may be specifically disposed in the vehicle interface 410.

In some embodiments, for example, the charging/discharging device 300 is connected to an electric vehicle 400a, and the pile-side controller 340 may be configured to:
when the pile-side alternating-current interface 311 is connected to the vehicle-side alternating-current interface 411, the pile-side CC interface 312 is connected to the vehicle-side CC interface 412, and the pile-side CP interface 313 is connected to the vehicle-side CP interface 413, adjust the equivalent resistance value of the resistance conversion circuit 320; and
control the switch unit 390 to cut off the connection between the other end of the resistance conversion circuit 320 and the pile-side CC interface 312.

The vehicle-side controller 440 may be configured to adjust a voltage value of the vehicle-side CP interface 413 in response to detecting a change in the resistance value of the vehicle-side CC interface 412.

The pile-side controller 340 is further configured to: in response to a change in a voltage value of the pile-side CP interface 313, control the switch unit 390 to conduct the connection between the other end of the resistance conversion circuit 320 and the pile-side CC interface 312, to enable the vehicle-side controller 440 to detect an adjusted equivalent resistance value of the resistance conversion circuit 320 through the vehicle-side CC interface 412.

It can be understood that, in this embodiment of this application, when the pile-side CP interface 313 is connected to the vehicle-side CP interface 413, the voltage value of the pile-side CP interface 313 is the same as the voltage value of the vehicle-side CP interface 413.

Specifically, during charging or discharging of the electric vehicle 400a through the charging/discharging device 300, if a charging/discharging mode executed by the electric vehicle 400a needs to be changed, for example, when the electric vehicle 400a determines, by detecting the equivalent resistance value of the resistance conversion circuit 320, to execute a charging mode, if the electric vehicle 400a needs to change to executing a V2V discharging mode, the pile-side controller 340 first adjusts the equivalent resistance value of the resistance conversion circuit 320 from a current charging resistance value to a V2V discharging resistance value, and then controls the switch unit 390 to cut off the connection between the other end of the resistance conversion circuit 320 and the pile-side CC interface 312, so that the resistance value of the pile-side CC interface 312, namely, the resistance value of the vehicle-side CC interface 412, becomes infinite.

When the vehicle-side controller 440 detects that the resistance value of the vehicle-side CC interface 412 is infinite, the vehicle-side controller 440 may adjust the voltage value of the vehicle-side CP interface 413, in other words, adjust the voltage value of the pile-side CP interface 313, in response. Further, the charging/discharging device 300 determines, based on detecting the change in the voltage value of the pile-side CP interface 313, that the vehicle-side controller 440 has detected that the resistance value of the pile-side CC interface 312 is infinite, and then controls the switch unit 390 to conduct the connection between the other end of the resistance conversion circuit 320 and the pile-side CC interface 312 again, so that the resistance values of the pile-side CC interface 312 and the vehicle-side CC interface 412 change from infinity to the adjusted equivalent resistance value of the resistance conversion circuit 320, in other words, change to the V2V discharging resistance value. Therefore, the vehicle-side controller 440 can detect that the resistance value of the vehicle-side CC interface 412 is the V2V discharging resistance value in this case, and then determine to execute the V2V discharging mode.

In the foregoing technical solution, when the electric vehicle 400 is connected to the charging/discharging device 300 and the electric vehicle 400 needs to change a charging/discharging mode executed through the charging/discharging device 300, the charging/discharging device 300 may first adjust a value of the equivalent resistance value of the resistance conversion circuit 320 to correspond to a changed charging/discharging mode, and then enable, through the switch unit 390, the resistance value of the pile-side CC interface 312, namely, the resistance value of the vehicle-side CC interface 412, to change from infinity to the adjusted equivalent resistance value of the resistance conversion circuit 320. In this way, based on a process in which the resistance value of the vehicle-side CC interface 412 changes from infinity to the adjusted equivalent resistance value of the resistance conversion circuit 320, the vehicle-side controller 440 can detect the resistance value of the vehicle-side CC interface 412, in other words, detect the adjusted equivalent resistance value of the resistance conversion circuit 320, and change the charging/discharging mode based on the adjusted equivalent resistance value of the resistance conversion circuit 320.

Further, in some embodiments, the charging/discharging device 300 may further include a pile-side connection confirm circuit 3100, and the electric vehicle 400 may further include a vehicle-side connection confirm circuit 450. The pile-side connection confirm circuit 3100 is connected to the pile-side CP interface 313, and the pile-side connection confirm circuit 3100 is configured to adjust the voltage value of the pile-side CP interface 313. The vehicle-side connection confirm circuit 450 is connected to the vehicle-side CP interface 413, and the vehicle-side connection confirm circuit 450 is configured to adjust the voltage value of the vehicle-side CP interface 413.

For example, the charging/discharging device 300 is connected to the electric vehicle 400a. That the vehicle-side controller 440 may be configured to adjust the voltage value of the vehicle-side CP interface 413 in response to detecting the change in the resistance value of the vehicle-side CC interface 412 includes:

The vehicle-side controller 440 is configured to:
in response to detecting a change in a voltage value of the vehicle-side CC interface 412, control the vehicle-side connection confirm circuit 450 to adjust the voltage value of the vehicle-side CP interface 413, in other words, adjust the voltage value of the pile-side CP interface 313.

That the pile-side controller 340 is further configured to: in response to the change in the voltage value of the pile-side CP interface 313, control the switch unit 390 to conduct the connection between the other end of the resistance conversion circuit 320 and the pile-side CC interface 312, to enable the vehicle-side controller 440 to detect the adjusted equivalent resistance value of the resistance conversion circuit 320 through the vehicle-side CC interface 412 includes:

The pile-side controller 340 is further configured to:
in response to detecting a change in the voltage value of the pile-side CP interface 313, control the pile-side connection confirm circuit 3100 to adjust the voltage value of the pile-side CP interface 313, in other words, adjust the voltage value of the vehicle-side CP interface 413, to enable the vehicle-side controller 440 to determine, based on the voltage value of the vehicle-side CP interface 413, to detect the adjusted equivalent resistance value of the resistance conversion circuit 320 through the vehicle-side CC interface 412; and
control the switch unit 390 to conduct the connection between the other end of the resistance conversion circuit 320 and the pile-side CC interface 312, to enable the vehicle-side controller 440 to detect the adjusted equivalent resistance value of the resistance conversion circuit 320 through the vehicle-side CC interface 412.

Specifically, in a process in which the vehicle-side controller 440 changes from a currently executed charging mode to the V2V discharging mode, when the vehicle-side controller 440 detects that the resistance value of the vehicle-side CC interface 412 is infinite, the vehicle-side controller 440 may adjust the voltage value of the vehicle-side CP interface 413 through the vehicle-side connection confirm circuit 450, in other words, adjust the voltage value of the pile-side CP interface 313, in response. When the pile-side controller 340 determines, based on detecting the change in the voltage value of the pile-side CP interface 313, that the vehicle-side controller 440 has detected that the resistance value of the pile-side CC interface 312 is infinite, the pile-side controller 340 may first adjust the voltage value of the pile-side CP interface 313 through the pile-side connection confirm circuit 3100, to simulate a process of disconnection and reconnection between the pile-side CP interface 313 and the vehicle-side CP interface 413. To be specific, during specific implementation, the pile-side CP interface 313 is a CP plug in the charging/discharging connector plug, and the vehicle-side CP interface 413 is a CP socket in the vehicle-side socket. The pile-side controller 340 adjusts a voltage value of the CP plug through the pile-side connection confirm circuit 3100, to simulate a process of removing the charging/discharging connector plug from the vehicle socket and then re-inserting the charging/discharging connector plug into the vehicle socket.

Then the pile-side controller 340 conducts the connection between the resistance conversion circuit 320 and the pile-side CC interface 312 through the switch unit 390 again, so that the resistance value of the pile-side CC interface 312, namely, the resistance value of the vehicle-side CC interface 412, changes from infinity to the adjusted equivalent resistance value of the resistance conversion circuit 320, that is, the V2V discharging resistance value. Therefore, the vehicle-side controller 440 can detect that the resistance value of the vehicle-side CC interface 412 is the V2V discharging resistance value in this case, and then determine to execute the V2V discharging mode.

In the foregoing technical solution, the process of disconnection and reconnection between the pile-side CP interface 313 and the vehicle-side CP interface 413 is simulated, to simulate the process of removing the charging/discharging connector from the vehicle socket and then re-inserting the charging/discharging connector into the vehicle socket. This helps avoid the following case: When the switch unit 390 cuts off the connection between the resistance conversion circuit 320 and the pile-side CC interface 312, the vehicle-side controller 440 mistakenly considers that a connection between the pile-side CC interface 312 and the vehicle-side CC interface 412 fails, and therefore no longer detects the resistance value of the pile-side CC interface 312.

With reference to the accompanying drawings, an example in which the electric vehicle 400a is connected to the charging/discharging device 300 is used below to further describe a specific circuit structure of the pile-side connection confirm circuit 3100 in the charging/discharging device 300 and the vehicle-side connection confirm circuit 450 in the electric vehicle 400a.

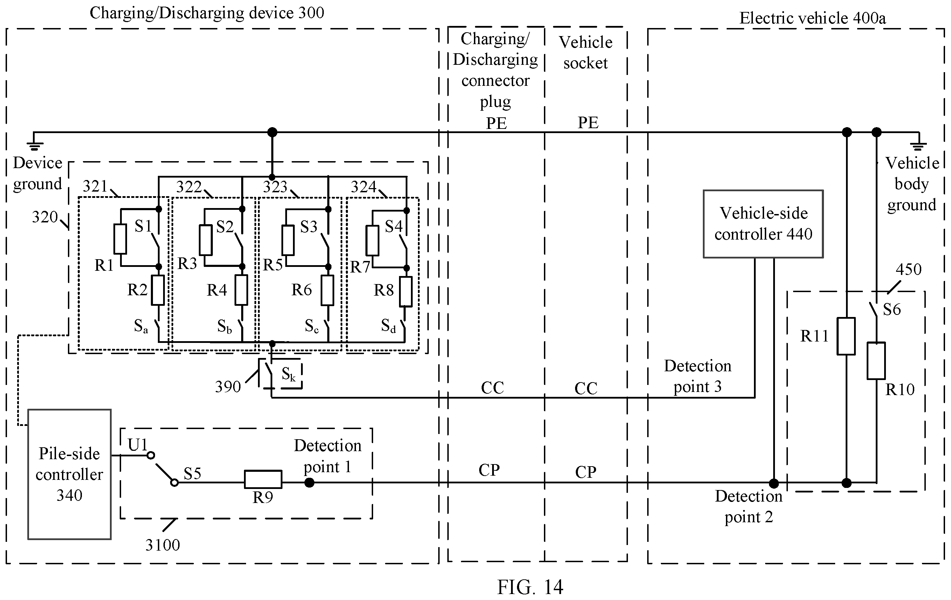

FIG. 14 is a diagram of an example specific circuit structure of a pile-side connection confirm circuit 3100 in a charging/discharging device 400 and a vehicle-side connection confirm circuit 450 in an electric vehicle 400a according to an embodiment of this application.

As shown in FIG. 13 and FIG. 14, a charging connector plug shown in FIG. 14 includes the device interface 310 shown in FIG. 13, and a vehicle socket shown in FIG. 14 includes the vehicle interface 410 of the electric vehicle 400a shown in FIG. 13. A CC plug in the charging/discharging connector plug corresponds to the pile-side CC interface 312 in the device interface 310, a CP plug in the charging/discharging connector plug corresponds to the pile-side CP interface 313 in the device interface 310, and a PE plug in the charging connector plug corresponds to the pile-side PE interface in the device interface 310. A CC socket in the vehicle socket corresponds to the vehicle-side CC interface 412 in the vehicle interface 410, a CP socket in the vehicle socket corresponds to the vehicle-side CP interface 413 in the vehicle interface 410, and a PE socket in the vehicle-side socket corresponds to the vehicle-side PE socket in the vehicle interface 410.

The pile-side connection confirm circuit 390 includes a first switch S5, a first resistor R9, and a voltage source U1. One end of the first switch S5 is connected to the voltage source U1, and the other end of the first switch S5 is connected to the CP plug through the first resistor R9. A detection point 1 is provided between the first resistor R9 and the CP plug, and a voltage value at the detection point 1 is a voltage value of the CP plug. The vehicle-side connection confirm circuit 450 includes a second switch S6, a second resistor R10, and a third resistor R11. One end of the second resistor R10 is grounded through the second switch S6, one end of the third resistor R11 is grounded, and the other end of the second resistor R10 is connected in parallel to the other end of the third resistor R11 and then connected to the CP socket. A detection point 2 is provided between the CP socket and a parallel connection point between the other end of the second resistor R10 and the other end of the third resistor R11, and a voltage value at the detection point 2 is a voltage value of the CP socket. When the charging/discharging connector plug is connected to the vehicle socket, the voltage value at the detection point 1 is the same as the voltage value at the detection point 2.

A switch unit 390 includes a switch Sₖ. One end of a resistance conversion circuit 320 is grounded, and the other end is connected to the CC plug through the switch Sₖ. A detection point 3 is provided between a vehicle-side controller 440 and the CC socket, and a resistance value at the detection point 3 is a resistance value of the CC socket.

When the charging/discharging connector plug is connected to the vehicle socket, the pile-side connection confirm circuit 390 forms a loop with the vehicle-side connection confirm circuit 390 through the CP plug and the CP socket, and there is a first voltage value at the detection point 1 and the detection point 2. For the electric vehicle 400a, if the vehicle-side controller 440 controls the second switch S6 to be turned off, because the second resistor R10 no longer performs voltage division, the voltage value at the detection point 2 changes from the first voltage value to a second voltage value. In this way, the vehicle-side connection confirm circuit 450 adjusts the voltage value at the detection point 2, in other words, adjusts the voltage value at the detection point 1, through turning-off of the second switch S6.

For the charging/discharging device 300, if a pile-side controller 340 controls the first switch S5 to be turned off, the voltage source U1 is disconnected from the first resistor R9, and the voltage value at the detection point 1 changes from the second voltage value to zero. If the pile-side controller 340 controls the first switch S5 to be turned on again, a connection between the voltage source U1 and the first resistor R9 is conducted, and the voltage value at the detection point 1 changes from zero to the second voltage value again. In this way, the pile-side connection confirm circuit 3100 adjusts the voltage value at the detection point 1, in other words, adjusts the voltage value at the detection point 2, through turning-off and turning-on of the first switch S5, to simulate a process of disconnection and reconnection between the CP plug and the CP socket.

An example in which the voltage source is 12 V and resistance values of the first resistor R9, the second resistor R10, and the third resistor R11 are equal is used below to describe an example in which the electric vehicle 400a changes from a currently executed charging mode to executing a V2V discharging mode.

When the electric vehicle 400a executes a charging mode and receives an alternating current output by the charging/discharging device 300, the charging/discharging connector plug is connected to the vehicle socket. Switches in a charging resistor circuit 321 in the resistance conversion circuit 320 and the switch Sₖ are in an on state. Switches in a V2G discharging resistor circuit 322, switches in a V2L discharging resistor circuit 323, and switches in a V2V discharging resistor circuit 324 in the resistance conversion circuit 320 are in an off state. An equivalent resistance value of the resistance conversion circuit 320 is a charging resistance value R2. In other words, the resistance value at the detection point 3 is R2. In addition, the pile-side connection confirm circuit 3100 and the vehicle-side connection confirm circuit 450 form a loop, and the first switch S5 and the second switch S6 are in an on state. Because a resistor has a voltage division function, a voltage at the detection point 1 and a voltage at the detection point 2 are 6 V in this case.

In this case, if the electric vehicle 400a needs to change to executing the V2V discharging mode, in response to a discharging request, obtained after the change, of the electric vehicle 400a, the pile-side controller 340 controls the switches in the V2V discharging resistor circuit 324 to be turned on, and controls the switches in the charging resistor circuit 321, the switches in the V2G discharging resistor circuit 322, the switches in the V2L discharging resistor circuit 323, and the switch Sₖ to be turned off. In this case, the equivalent resistance value of the resistance conversion circuit 320 is a V2V discharging resistance value R8. However, because the switch Sₖ is turned off, the resistance value at the detection point 3 changes from R2 to infinity.

After detecting that the resistance value at the detection point 3 changes to infinity, the vehicle-side controller 440 controls the switch S6 to be turned off. In this case, the voltage value at the detection point 2 changes from 6 V to 9 V. In other words, the voltage value at the detection point 1 changes from 6 V to 9 V. The pile-side controller 340 determines, by detecting that the voltage value at the detection point 1 changes from 6 V to 9 V, that the vehicle-side controller 440 has detected that the resistance value at the detection point 3 is infinite. Then the pile-side controller 340 controls the first switch S5 to be first turned off and then turned on, so that the voltage value at the detection point 2 changes from 9 V to 0 V and then changes from 0 V to 9 V, to simulate a process of removing the charging connector plug from the vehicle socket and then re-inserting the charging connector plug into the vehicle socket. In this way, the vehicle-side controller 440 can determine, based on detecting the change in the voltage value at the detection point 2, that the charging/discharging connector plug is re-plug-connected to the vehicle socket, to determine to re-detect the resistance value at the detection point 3.

Then the pile-side controller 340 controls the switch Sₖ to be turned on again, so that the resistance value at the detection point 3 changes from infinity to the V2V discharging resistance value R8. The vehicle-side controller 440 determines, by detecting the resistance value at the detection point 3, to execute the V2V discharging mode, and controls the second switch S6 to be turned on after completing connection confirmation with the charging/discharging device 300, so that the voltage value at the detection point 2 and the voltage value at the detection point 1 change from 9 V to 6 V.

It can be understood that the foregoing specific circuit structure of the pile-side connection confirm circuit 3100 and the vehicle-side connection confirm circuit 450 is merely an example. In this embodiment of this application, it only needs to be ensured that the pile-side connection confirm circuit 3100 and the vehicle-side connection confirm circuit 450 can adjust the voltage value of the pile-side CP interface 313 and the voltage value of the vehicle-side CP interface 413 respectively.

It can be further understood that, for a specific structure, not described in detail, of the charging/discharging system 600, reference may be made to related content in the embodiments shown in FIG. 3 to FIG. 12. Details are not described herein again.

The foregoing describes the charging/discharging device 300 provided in embodiments of this application and the charging/discharging system 600 including the charging/discharging device 300. The following describes a charging/discharging method that may be applied to the charging/discharging device 300 and that is provided in embodiments of this application.

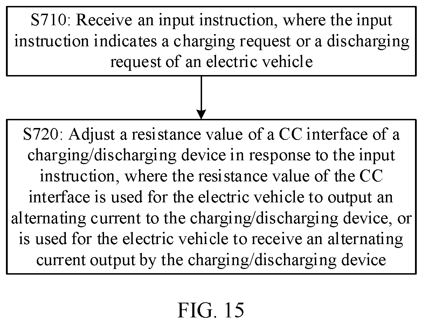

FIG. 15 is a schematic flowchart of a charging/discharging method 700 according to an embodiment of this application. The charging/discharging method 700 may be performed by a charging/discharging device 300, and specifically, may be performed by a pile-side controller 340 in the charging/discharging device 300.

It should be understood that descriptions of the method embodiment may correspond to the descriptions of the foregoing structure embodiments. Therefore, for content that is not described in detail, refer to the foregoing apparatus embodiments. Details are not described below again.

As shown in FIG. 15, the charging/discharging method 700 may include the following steps.

S710: Receive an input instruction, where the input instruction indicates a charging request or a discharging request of an electric vehicle.

Specifically, the input instruction may be an instruction input by a vehicle owner of the electric vehicle to the charging/discharging device through a human-computer interaction interface that is set on the charging/discharging device. Alternatively, the charging/discharging device may be communicatively connected to a terminal device through a platform, and the input instruction may be an instruction sent by the vehicle owner of the electric vehicle to the charging/discharging device through the terminal device.

S720: Adjust a resistance value of a CC interface of the charging/discharging device in response to the input instruction, where the resistance value of the CC interface is used for the electric vehicle to output an alternating current to the charging/discharging device, or is used for the electric vehicle to receive an alternating current output by the charging/discharging device.

It can be understood that the CC interface of the charging/discharging device may be the pile-side CC interface 312 described in the foregoing embodiments.

Specifically, according to the charging/discharging device 300 shown in FIG. 5, the pile-side CC interface 312 of the charging/discharging device 300 is configured to connect to the electric vehicle 400. One end of a resistance conversion circuit 320 in the charging/discharging device 300 is grounded, and the other end is connected to the pile-side CC interface 312. The resistance conversion circuit 320 includes a plurality of switches and a plurality of resistors. The pile-side controller 340 in the charging/discharging device 300 may adjust an equivalent resistance value of the resistance conversion circuit 320, in other words, adjust a resistance value of the pile-side CC interface 312, according to the input instruction by controlling an on/off state of the plurality of switches in the resistance conversion circuit 320, so that the electric vehicle 400 determines, by detecting the resistance value of the pile-side CC interface 312, to execute a charging mode or execute a discharging mode.

In the foregoing technical solution, the charging/discharging device may adjust a value of the resistance value of the CC interface of the charging/discharging device according to a charging request or a discharging request of the electric vehicle, so that the electric vehicle determines, by detecting the resistance value of the CC interface, to execute the charging mode or the discharging mode, to implement a charging function and a discharging function of the electric vehicle. In addition, in the foregoing charging/discharging method, the electric vehicle determines, based on different values of the resistance value of the CC interface, to execute the charging mode or the discharging mode. Therefore, the charging/discharging device may be directly equipped with a charging/discharging connector including a CC interface, to enable the electric vehicle to determine a charging/discharging mode to be executed. This can avoid device replacement during charging/discharging of the electric vehicle, to simplify a charging/discharging operation of the electric vehicle. In addition, the charging/discharging device provided in this embodiment of this application does not need to be equipped with both a charging connector device and a discharging connector device. This not only can reduce costs of the charging/discharging device, but also can reduce a size of the charging/discharging device, so that the charging/discharging device can be carried in the vehicle.

During specific implementation, in some embodiments, according to the charging/discharging device 300 shown in FIG. 5, adjusting the resistance value of the CC interface of the charging/discharging device in response to the input instruction in S720 may specifically include: in response to the input instruction, controlling the on/off state of the plurality of switches in the resistance conversion circuit 320, to adjust the equivalent resistance value of the resistance conversion circuit 320 to any one of a charging resistance value, a V2G discharging resistance value, a V2V discharging resistance value, and a V2L discharging resistance value.

The charging resistance value is used for the electric vehicle to receive an alternating current output by the charging/discharging device. The V2G discharging resistance value is used for the electric vehicle to output an alternating current to the charging/discharging device in a V2G discharging mode. The V2V discharging resistance value is used for the electric vehicle to output an alternating current to the charging/discharging device in a V2V discharging mode. The V2L discharging resistance value is used for the electric vehicle to output an alternating current to the charging/discharging device in a V2L discharging mode.

Specifically, according to the charging/discharging device 300 in FIG. 5, the pile-side controller 340 in the charging/discharging device 300 may adjust the equivalent resistance value of the resistance conversion circuit 320 according to the charging request indicated by the input instruction or a discharging request that is indicated by the input instruction and that indicates that the electric vehicle requests to execute the V2G discharging mode, execute the V2V discharging mode, or execute the V2L discharging mode, in other words, adjust the resistance value of the pile-side CC interface 312 to correspond to the charging mode, the V2G discharging mode, the V2V discharging mode, or the V2L discharging mode of the electric vehicle 400, to implement the charging function, a V2G discharging function, and a V2V discharging function of the electric vehicle 400.

For specific descriptions of adjusting, by the charging/discharging device 300, the equivalent resistance value of the resistance conversion circuit 320 to correspond to the charging mode, the V2G discharging mode, the V2V discharging mode, or the V2L discharging mode of the electric vehicle 400, to implement the charging function, the V2G discharging function, and the V2V discharging function of the electric vehicle 400, refer to the foregoing embodiments. Details are not described herein again.

In the foregoing technical solution, the equivalent resistance value of the resistance conversion circuit connected to the CC interface of the charging/discharging device may be adjusted according to the input instruction indicating that the electric vehicle requests charging or discharging, so that the electric vehicle determines, by detecting the resistance value of the CC interface, to execute a corresponding charging mode or discharging mode, to meet different charging requirements and discharging requirements of the electric vehicle.

In addition, even if the electric vehicle does not have a V2V discharging function, the charging/discharging device may still adjust the resistance value of the CC interface to the V2L discharging resistance value, to enable the electric vehicle to output an alternating current to an alternating-current interface based on the V2L discharging mode. The charging/discharging device further transmits, to another connected electric vehicle, the alternating current that is output by the electric vehicle based on the V2L mode, to similarly implement the V2V discharging function of the electric vehicle.

In some embodiments, during charging or discharging of the electric vehicle through the charging/discharging device, the electric vehicle and the charging/discharging device may exchange and configure a charging parameter or a discharging parameter through a PWM signal.

For example, in an example, the charging/discharging method 700 may further include:
when the resistance value of the CC interface of the charging/discharging device is used for the electric vehicle to output an alternating current to the charging/discharging device, and the charging/discharging device outputs an alternating current to another electric vehicle, receiving a power supply capability pulse width modulation PWM signal sent by the electric vehicle, where the power supply capability PWM signal indicates a maximum output current value of the electric vehicle;
sending the power supply capability PWM signal to the another electric vehicle, to enable the another electric vehicle to adjust a maximum allowed input current value based on the power supply capability PWM signal; and
controlling an alternating current output by the electric vehicle to be transmitted to the another electric vehicle.

Specifically, as shown in FIG. 5, when an electric vehicle 400a determines, by detecting the resistance value of the pile-side alternating-current interface 312 of the charging/discharging device 300, to execute a discharging mode, for example, execute a V2V discharging mode or a V2L discharging mode, and an electric vehicle 400b determines a charging mode by detecting the resistance value of the pile-side alternating-current interface 312, the electric vehicle 400a may send, to the pile-side controller 340 of the charging/discharging device 300, a power supply capability PWM signal indicating a maximum output current value that can be currently provided by the electric vehicle 400a, and the pile-side controller 340 further sends the power supply capability PWM signal to the electric vehicle 400b. The electric vehicle 400b may determine the maximum output current value of the electric vehicle 400a based on a duty cycle of the power supply capability PWM signal, further perform comparison between the maximum output current value of the electric vehicle 400a, a rated input current value of a bidirectional on-board charger in the electric vehicle 400b, and a rated capacity of a cable connected between the electric vehicle 400b and the charging/discharging device 300, and set a smallest one of the values as a maximum allowed input current value of the electric vehicle 400b. To be specific, the electric vehicle 400b then receives, through the charging/discharging device 300 based on the configured maximum allowed input current value, an alternating current output by the electric vehicle 400a.

In the foregoing technical solution, when the electric vehicle supplies electric energy to the another electric vehicle through the charging/discharging device, the charging/discharging device may send, to the another electric vehicle, the PWM signal indicating the maximum output current value that can be provided by the electric vehicle. In this way, the another electric vehicle can adjust the maximum allowed input current value of the another electric vehicle based on the PWM signal, to ensure that the electric vehicle properly supplies electric energy to the another electric vehicle through the charging/discharging device.

In some other embodiments, during charging or discharging of the electric vehicle through the charging/discharging device, the electric vehicle and the charging/discharging device may be communicatively connected, and exchange and configure a charging parameter or a discharging parameter through packet transmission.

For example, in an example, the charging/discharging method 700 may further include:
when the resistance value of the CC interface of the charging/discharging device is used for the electric vehicle to output an alternating current to the charging/discharging device, and the charging/discharging device outputs an alternating current to another electric vehicle, receiving a power supply capability packet sent by the electric vehicle, where the power supply capability packet indicates a maximum output current value of the electric vehicle;
sending the power supply capability packet to the another electric vehicle, to enable the another electric vehicle to adjust a maximum allowed input current value based on the power supply capability packet; and
controlling an alternating current output by the electric vehicle to be transmitted to the another electric vehicle.

It can be understood that a process in which the electric vehicle and the another electric vehicle that are connected to the charging/discharging device exchange and configure the discharging parameter through the power supply capability packet is similar to the foregoing process of exchanging and configuring the discharging parameter through the power supply capability PWM signal. Details are not described herein again.

In the foregoing technical solution, the electric vehicle may be communicatively connected to the charging/discharging device, for example, through a wireless connection. When the electric vehicle supplies electric energy to the another electric vehicle through the charging/discharging device, the charging/discharging device may send, to the another electric vehicle, the power supply capability packet indicating the maximum output current value that can be provided by the electric vehicle. In this way, the another electric vehicle can adjust the maximum allowed input current value of the another electric vehicle based on the packet, to ensure that the electric vehicle properly supplies electric energy to the another electric vehicle through the charging/discharging device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging/discharging device, comprising a resistance conversion circuit, a connection confirm CC interface, and an alternating-current interface, wherein
one end of the resistance conversion circuit is grounded, the other end of the resistance conversion circuit is connected to the CC interface, and the CC interface and the alternating-current interface are configured to connect to an electric vehicle; and
the resistance conversion circuit comprises a plurality of switches and a plurality of resistors, the plurality of switches are configured to adjust an equivalent resistance value of the resistance conversion circuit, and the equivalent resistance value of the resistance conversion circuit is used for the electric vehicle to output an alternating current to the alternating-current interface, or is used for the electric vehicle to receive an alternating current output by the alternating-current interface.

2. The charging/discharging device according to claim 1, wherein the charging/discharging device further comprises a controller, and the controller is configured to:
in response to a charging request or a discharging request of the electric vehicle, control an on/off state of the plurality of switches in the resistance conversion circuit, to adjust the equivalent resistance value of the resistance conversion circuit to any one of a charging resistance value, a vehicle-to-grid V2G discharging resistance value, a vehicle-to-vehicle V2V discharging resistance value, and a vehicle-to-load V2L discharging resistance value, wherein
the charging resistance value is used for the alternating-current interface to output an alternating current to the electric vehicle;
the V2G discharging resistance value is used for the alternating-current interface to receive an alternating current output by the electric vehicle in a V2G discharging mode;
the V2V discharging resistance value is used for the alternating-current interface to receive an alternating current output by the electric vehicle in a V2V discharging mode; and
the V2L discharging resistance value is used for the alternating-current interface to receive an alternating current output by the electric vehicle in a V2L discharging mode.

3. The charging/discharging device according to claim 2, wherein the charging/discharging device further comprises a switch unit and a control pilot CP interface;
the other end of the resistance conversion circuit is connected to the CC interface through the switch unit, and the CP interface is configured to connect to the electric vehicle; and
the controller is further configured to:
when the alternating-current interface, the CC interface, and the CP interface are connected to the electric vehicle, adjust the equivalent resistance value of the resistance conversion circuit;
control the switch unit to cut off the connection between the other end of the resistance conversion circuit and the CC interface; and
in response to a change in a voltage value of the CP interface, control the switch unit to conduct the connection between other end of the resistance conversion circuit and the CC interface, to enable the electric vehicle to detect an adjusted equivalent resistance value of the resistance conversion circuit through the CC interface.

4. The charging/discharging device according to claim 3, wherein the charging/discharging device further comprises a connection confirm circuit, the connection confirm circuit is connected to the CP interface, and the connection confirm circuit is configured to adjust the voltage value of the CP interface; and
that the controller is configured to: in response to the change in the voltage value of the CP interface, control the switch unit to conduct the connection between other end of the resistance conversion circuit and the CC interface, to enable the electric vehicle to detect the adjusted equivalent resistance value of the resistance conversion circuit through the CC interface comprises:
the controller is configured to:
in response to detecting the change in the voltage value of the CP interface, control the connection confirm circuit to adjust the voltage value of the CP interface, to enable the electric vehicle to determine, based on the voltage value of the CP interface, to detect the adjusted equivalent resistance value of the resistance conversion circuit through the CC interface; and
control the switch unit to conduct the connection between other end of the resistance conversion circuit and the CC interface, to enable the electric vehicle to detect the adjusted equivalent resistance value of the resistance conversion circuit through the CC interface.

5. The charging/discharging device according to claim 4, wherein the connection confirm circuit comprises a first switch, a first resistor, and a voltage source;
one end of the first switch is connected to the voltage source, and the other end of the first switch is connected to the CP interface through the first resistor; and
that the controller is configured to: in response to detecting the change in the voltage value of the CP interface, control the connection confirm circuit to adjust the voltage value of the CP interface comprises:
the controller is configured to:
in response to detecting the change in the voltage value of the CP interface, control the first switch to be first turned off and then turned on, to adjust the voltage value of the CP interface.

6. The charging/discharging device according to any one of claims 2 to 5, wherein the charging/discharging device further comprises a power transmission line;
the power transmission line is configured to transmit an alternating current from an alternating-current power grid to the electric vehicle connected to the alternating-current interface, or transmit, to the alternating-current power grid, an alternating current that is output by the electric vehicle and that is received by the alternating-current interface; and
the power transmission line is further configured to transmit, to another electric vehicle connected to the charging/discharging device, the alternating current that is output by the electric vehicle and that is received by the alternating-current interface.

7. The charging/discharging device according to any one of claims 2 to 6, wherein the charging/discharging device further comprises an alternating-current-interface-side electricity meter; and
the alternating-current-interface-side electricity meter is configured to measure an electric quantity of the alternating current that is output by the electric vehicle and that is received by the alternating-current interface, or measure an electric quantity of an alternating current that is output by the alternating-current interface to the electric vehicle.

8. The charging/discharging device according to any one of claims 2 to 7, wherein the controller is further configured to:
when the alternating-current interface receives the alternating current that is output by the electric vehicle in the V2L discharging mode or the V2V discharging mode, and the charging/discharging device outputs the alternating current to the another electric vehicle connected to the charging/discharging device, in response to the electric quantity of the alternating current that is output by the electric vehicle and that is received by the alternating-current interface being less than an electric quantity needed for charging the another electric vehicle, control the alternating current from the alternating-current power grid and the alternating current received by the alternating-current interface to be transmitted to the another electric vehicle; or
in response to the electric quantity of the alternating current that is output by the electric vehicle and that is received by the alternating-current interface being greater than an electric quantity needed for charging the another electric vehicle, control the alternating current received by the alternating-current interface to be transmitted to the alternating-current power grid and the another electric vehicle.

9. A charging/discharging system, comprising a charging/discharging device and an electric vehicle, wherein the charging/discharging device comprises a resistance conversion circuit, a pile-side connection confirm CC interface, and a pile-side alternating-current interface, and the electric vehicle comprises a vehicle-side CC interface and a vehicle-side alternating-current interface, wherein
one end of the resistance conversion circuit is grounded, the other end of the resistance conversion circuit is connected to the pile-side CC interface, the pile-side CC interface is configured to connect to the vehicle-side CC interface, and the pile-side alternating-current interface is configured to connect to the vehicle-side alternating-current interface; and
the resistance conversion circuit comprises a plurality of switches and a plurality of resistors, the plurality of switches are configured to adjust an equivalent resistance value of the resistance conversion circuit, and the equivalent resistance value of the resistance conversion circuit is used for the vehicle-side alternating-current interface to output an alternating current to the pile-side alternating-current interface, or is used for the vehicle-side alternating-current interface to receive an alternating current output by the pile-side alternating-current interface.

10. The charging/discharging system according to claim 9, wherein the charging/discharging device further comprises a pile-side controller, and the pile-side controller is configured to:
in response to a charging request or a discharging request of the electric vehicle, control an on/off state of the plurality of switches in the resistance conversion circuit, to adjust the equivalent resistance value of the resistance conversion circuit to any one of a charging resistance value, a vehicle-to-grid V2G discharging resistance value, a vehicle-to-vehicle V2V discharging resistance value, and a vehicle-to-load V2L discharging resistance value, wherein
the charging resistance value is used for the pile-side alternating-current interface to output an alternating current to the vehicle-side alternating-current interface;
the V2G discharging resistance value is used for the pile-side alternating-current interface to receive an alternating current output by the vehicle-side alternating-current interface in a V2G discharging mode;
the V2V discharging resistance value is used for the pile-side alternating-current interface to receive an alternating current output by the vehicle-side alternating-current interface in a V2V discharging mode; and
the V2L discharging resistance value is used for the pile-side alternating-current interface to receive an alternating current output by the vehicle-side alternating-current interface in a V2L discharging mode.

11. The charging/discharging system according to claim 10, wherein the charging/discharging device further comprises a switch unit and a pile-side control pilot CP interface, and the electric vehicle comprises a vehicle-side CP interface and a vehicle-side controller;
the other end of the resistance conversion circuit is connected to the pile-side CC interface through the switch unit, and the pile-side CP interface is configured to connect to the vehicle-side CP interface;
the pile-side controller is further configured to:
when the pile-side alternating-current interface is connected to the vehicle-side alternating-current interface, the pile-side CC interface is connected to the vehicle-side CC interface, and the pile-side CP interface is connected to the vehicle-side CP interface, adjust the equivalent resistance value of the resistance conversion circuit; and
control the switch unit to cut off a connection between the other end of the resistance conversion circuit and the pile-side CC interface, to adjust a voltage value of the pile-side CC interface;
the vehicle-side controller is configured to:
in response to detecting a change in a resistance value of the pile-side CC interface, adjust a voltage value of the vehicle-side CP interface; and
the pile-side controller is further configured to:
in response to a change in a voltage value of the pile-side CP interface, control the switch unit to conduct the connection between other end of the resistance conversion circuit and the pile-side CC interface, to enable the vehicle-side controller to detect an adjusted equivalent resistance value of the resistance conversion circuit through the vehicle-side CC interface.

12. The charging/discharging system according to claim 11, wherein the charging/discharging device further comprises a pile-side connection confirm circuit, and the electric vehicle further comprises a vehicle-side connection confirm circuit;
the pile-side connection confirm circuit is connected to the pile-side CP interface, and the pile-side connection confirm circuit is configured to adjust the voltage value of the pile-side CP interface;
the vehicle-side connection confirm circuit is connected to the vehicle-side CP interface, and the vehicle-side connection confirm circuit is configured to adjust the voltage value of the vehicle-side CP interface;
that the vehicle-side controller is configured to: in response to detecting a change in a resistance value of the vehicle-side CC interface, adjust the voltage value of the vehicle-side CP interface comprises:
the vehicle-side controller is configured to:
in response to detecting the change in the resistance value of the vehicle-side CC interface, control the vehicle-side connection confirm circuit to adjust the voltage value of the vehicle-side CP interface; and
that the pile-side controller is further configured to: in response to the change in the voltage value of the pile-side CP interface, control the switch unit to conduct the connection between other end of the resistance conversion circuit and the pile-side CC interface, to enable the vehicle-side controller to detect the adjusted equivalent resistance value of the resistance conversion circuit through the vehicle-side CC interface comprises:
the pile-side controller is configured to:
in response to detecting the change in the voltage value of the pile-side CP interface, control the pile-side connection confirm circuit to adjust the voltage value of the pile-side CP interface, to enable the vehicle-side controller to determine, based on the voltage value of the vehicle-side CP interface, to detect the adjusted equivalent resistance value of the resistance conversion circuit through the vehicle-side CC interface; and
control the switch unit to conduct the connection between other end of the resistance conversion circuit and the pile-side CC interface, to enable the vehicle-side controller to detect the adjusted equivalent resistance value of the resistance conversion circuit through the vehicle-side CC interface.

13. The charging/discharging system according to claim 12, wherein the pile-side connection confirm circuit comprises a first switch, a first resistor, and a voltage source, and the vehicle-side connection confirm circuit comprises a second switch, a second resistor, and a third resistor;
one end of the first switch is connected to the voltage source, and the other end of the first switch is connected to the pile-side CP interface through the first resistor;
one end of the second resistor is grounded through the second switch, one end of the third resistor is grounded, and the other end of the second resistor and the other end of the third resistor are connected in parallel and then connected to the vehicle-side CP interface;
that the vehicle-side controller is configured to: in response to detecting the change in the resistance value of the vehicle-side CC interface, control the vehicle-side connection confirm circuit to adjust the voltage value of the vehicle-side CP interface comprises:
the vehicle-side controller is configured to:
in response to detecting the change in the resistance value of the vehicle-side CC interface, control the second switch to be turned off, to adjust the voltage value of the pile-side CP interface; and
that the pile-side controller is configured to: in response to detecting the change in the voltage value of the pile-side CP interface, control the pile-side connection confirm circuit to adjust the voltage value of the pile-side CP interface comprises:
the pile-side controller is configured to:
in response to detecting the change in the voltage value of the pile-side CP interface, control the first switch to be first turned off and then turned on, to adjust the voltage value of the vehicle-side CP interface.

14. A charging/discharging method, comprising:
receiving an input instruction, wherein the input instruction indicates a charging request or a discharging request of an electric vehicle; and
adjusting a resistance value of a connection confirm CC interface of a charging/discharging device in response to the input instruction, wherein the resistance value of the CC interface is used for the electric vehicle to output an alternating current to the charging/discharging device, or is used for the electric vehicle to receive an alternating current output by the charging/discharging device.

15. The charging/discharging method according to claim 14, wherein the charging/discharging device comprises a resistance conversion circuit, one end of the resistance conversion circuit is grounded, the other end of the resistance conversion circuit is connected to the CC interface, and the resistance conversion circuit comprises a plurality of switches and a plurality of resistors; and
adjusting the resistance value of the connection confirm CC interface of the charging/discharging device in response to the input instruction comprises:
in response to the input instruction, controlling an on/off state of the plurality of switches in the resistance conversion circuit, to adjust the equivalent resistance value of the resistance conversion circuit to any one of a charging resistance value, a vehicle-to-grid V2G discharging resistance value, a vehicle-to-vehicle V2V discharging resistance value, and a vehicle-to-load V2L discharging resistance value, wherein
the charging resistance value is used for the electric vehicle to receive an alternating current output by the charging/discharging device;
the V2G discharging resistance value is used for the electric vehicle to output an alternating current to the charging/discharging device in a V2G discharging mode;
the V2V discharging resistance value is used for the electric vehicle to output an alternating current to the charging/discharging device in a V2V discharging mode; and
the V2L discharging resistance value is used for the electric vehicle to output an alternating current to the charging/discharging device in a V2L discharging mode.

16. The charging/discharging method according to claim 14 or 15, wherein the charging/discharging method further comprises:
when the resistance value of the CC interface is used for the electric vehicle to output the alternating current to the charging/discharging device, and the charging/discharging device outputs an alternating current to another electric vehicle, receiving a power supply capability pulse width modulation PWM signal sent by the electric vehicle, wherein the power supply capability PWM signal indicates a maximum output current value of the electric vehicle;
sending the power supply capability PWM signal to the another electric vehicle, to enable the another electric vehicle to adjust a maximum allowed input current value based on the power supply capability PWM signal; and
controlling an alternating current output by the electric vehicle to be transmitted to the another electric vehicle.

17. The charging/discharging method according to claim 14 or 15, wherein the charging/discharging method further comprises:
when the resistance value of the CC interface is used for the electric vehicle to output the alternating current to the charging/discharging device, and the charging/discharging device outputs an alternating current to another electric vehicle, receiving a power supply capability packet sent by the electric vehicle, wherein the power supply capability packet indicates a maximum output current value of the electric vehicle;
sending the power supply capability packet to the another electric vehicle, to enable the another electric vehicle to adjust a maximum allowed input current value based on the power supply capability packet; and
controlling an alternating current output by the electric vehicle to be transmitted to the another electric vehicle.
